# EUROPEAN PATENT APPLICATION

(11) **EP 4 525 530 A1**
(43) Date of publication of application: **19.03.2025**
(21) Application number: 23819104.3
(22) Date of filing: 06.06.2023
(51) Int. Cl.: H04W 56/00

(54) **APPLICATION COMPONENT INTERACTION METHOD AND RELATED DEVICE**

(30) Priority: 09.06.2022 CN 202210653945; 31.08.2022 CN 202211068654
(71) Applicant: Huawei Technologies Co., Ltd., Shenzhen, Guangdong 518129 (CN)
(72) Inventor: CHEN, Xiaoxiao, Shenzhen, Guangdong 518129 (CN); GU, Bing, Shenzhen, Guangdong 518129 (CN); DING, Yaling, Shenzhen, Guangdong 518129 (CN); ZHOU, Songle, Shenzhen, Guangdong 518129 (CN)
(74) Representative: Pfenning, Meinig & Partner mbB
(86) International application number: PCT/CN2023/098551
(87) International publication number: WO 2023/236939

(57) **Abstract**

This application discloses an application component interaction method and a related device. When a communication connection is established between a local device and a remote device, running data of an application component on the remote device may be synchronized to the local device by using a distributed technology. The local device may refresh display of an application component on the local device based on the running data, and may further synchronize a control command of a user for the application component on the local device to the remote device, so that the remote device performs a task corresponding to the control command. This can achieve cross-device experience of application components, simplify user operations, and improve user experience.

## Description

This application claims priorities to Chinese Patent Application No. 202210653945.8, filed with the China National Intellectual Property Administration on June 9, 2022 and entitled "METHOD, APPARATUS, AND SYSTEM FOR IMPLEMENTING INTERACTION BETWEEN APPLICATION COMPONENTS THAT SHARE DATA ACROSS DEVICES", and to Chinese Patent Application No. 202211068654.9, filed with the China National Intellectual Property Administration on August 31, 2022 and entitled "APPLICATION COMPONENT INTERACTION METHOD AND RELATED DEVICE", both of which are incorporated herein by reference in their entireties.

### TECHNICAL FIELD

This application relates to the field of terminal technologies, and in particular, to an application component interaction method and a related device.

### BACKGROUND

With popularization of intelligent electronic devices and development of internet technologies, electronic devices such as smartphones, notebook computers, and tablet computers have become indispensable products in people's daily life. To meet increasing use requirements of users, a quantity of applications (Application, APP) and types of the applications installed on these electronic devices are also increasing. Usually, entries to these applications are displayed on a desktop of an electronic device in a form of desktop icons. Currently, in addition to desktop icons, some electronic device manufacturers further provide desktop application component functions. These desktop application components can serve as entries to applications. In addition, compared with conventional applications, these desktop application components are characterized by clearer visual effect, more flexible layouts, more flexible sizes, more abundant content, support for personalized customization, and the like, and can display content of applications in a lightweight, quick, and efficient manner, to support quick user operations and implement one-step direct service experience.

However, currently, application scenarios of application components are limited, leading to poor user experience.

### SUMMARY

Embodiments of this application provide an application component interaction method and a related device, to achieve cross-device experience of application components, simplify user operations, and improve user experience.

According to a first aspect, an embodiment of this application provides an application component interaction method, applied to a first electronic device. The method includes: A first electronic device displays a first user interface, where the first user interface includes a first application component, and the first application component is an application component of the first electronic device. The first electronic device establishes a first connection to a second electronic device. The first electronic device receives, based on the first connection, a first message sent by the second electronic device, where the first message includes first data, and the first data is generated by the second electronic device by running a second application component. The first electronic device generates first content based on the first data, and displays the first content in the first application component. The first connection is a connection between the first application component and the second application component.

According to the implementation of the method provided in the first aspect, when a communication connection is established between a local device and a remote device, running data of an application component on the remote device may be synchronized to the local device, and the local device may refresh display of an application component on the local device based on the running data.

In a possible implementation, the first application component and the second application component are application components that provide a same function.

In this way, the first electronic device may refresh display of the first application component based on running data of the second application component on the second electronic device.

In a possible implementation, after the first electronic device establishes the first connection to the second electronic device, the method further includes: The first electronic device displays a first identifier in the first application component, where the first identifier indicates a status of the first connection, and a display mode of the first identifier in a case in which the first connection is in a connected state is different from a display mode of the first identifier in a case in which the first connection is in a disconnected state.

In this way, a user may learn of, based on different display modes of the first identifier, whether the first connection is in the connected state or the disconnected state.

In a possible implementation, after the first electronic device displays the first identifier in the first application component, the method further includes: The first electronic device detects a first operation performed by a user on the first identifier. The first electronic device displays a first window in response to the first operation, where the first window includes a first option. The first electronic device detects a second operation performed by the user on the first option. The first electronic device deletes the first connection in response to the second operation.

In this way, the user may actively delete the first connection. After the first connection is deleted, the first connection is interrupted.

In a possible implementation, when the first connection is in the disconnected state, the first window further includes a second option, and before the first electronic device detects the second operation performed by the user on the first option, the method further includes: The first electronic device detects a third operation performed by the user on the second option, and the first electronic device re-establishes the first connection to the second electronic device in response to the third operation.

In this way, when the first connection is interrupted, the user may actively re-establish the first connection.

In a possible implementation, device information of the second electronic device is displayed on the first identifier.

In this way, the user may learn of a specific electronic device to which the first electronic device establishes the first connection.

In a possible implementation, after the first electronic device displays the first content in the first application component, the method further includes: The first electronic device receives, based on the first connection, a second message sent by the second electronic device, where the second message includes second data, the second data is generated by the second electronic device by running the second application component after the second electronic device generates the first data, and the second data is different from the first data. The first electronic device generates second content based on the second data, and displays the second content in the first application component.

In this way, when running data of the second application component changes, the second electronic device may re-synchronize running data of the second application component to the first electronic device, and the first electronic device may refresh display of the first application component based on the running data.

In a possible implementation, before the first electronic device establishes the first connection to the second electronic device, the method further includes: The first electronic device detects a fourth operation performed by the user. The first electronic device displays a second window in response to the fourth operation, where the second window includes one or more options, and the one or more options include an option corresponding to the device information of the second electronic device. The first electronic device detects a fifth operation performed by the user on the option corresponding to the device information of the second electronic device. The first electronic device sends a first request to the second electronic device in response to the fifth operation, where the first request is used to request the second electronic device to establish the first connection to the first electronic device.

In this way, the user may actively select an electronic device to which the first electronic device is to establish the first connection.

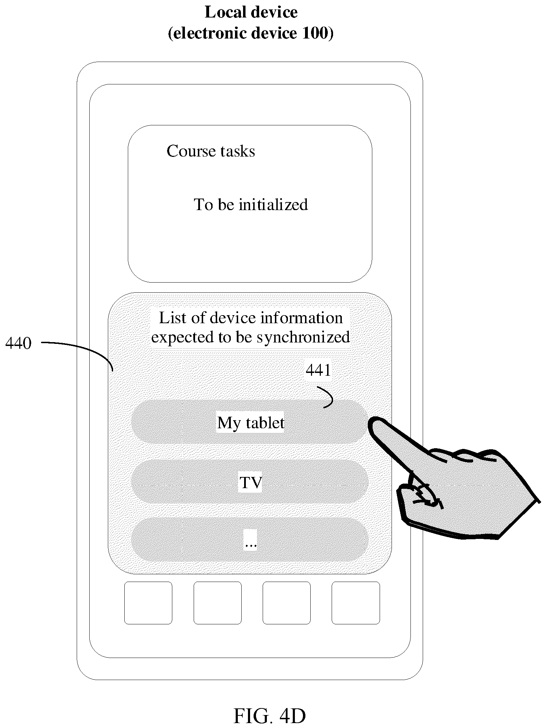

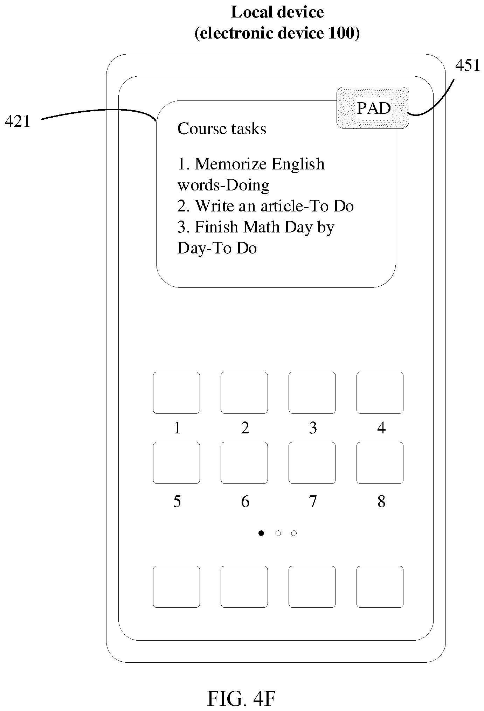

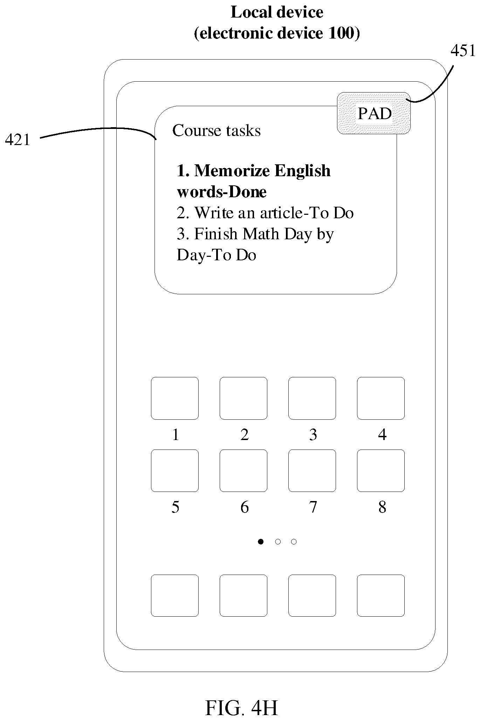

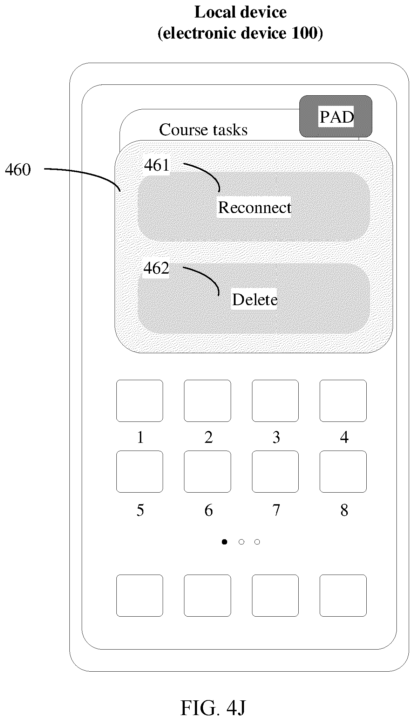

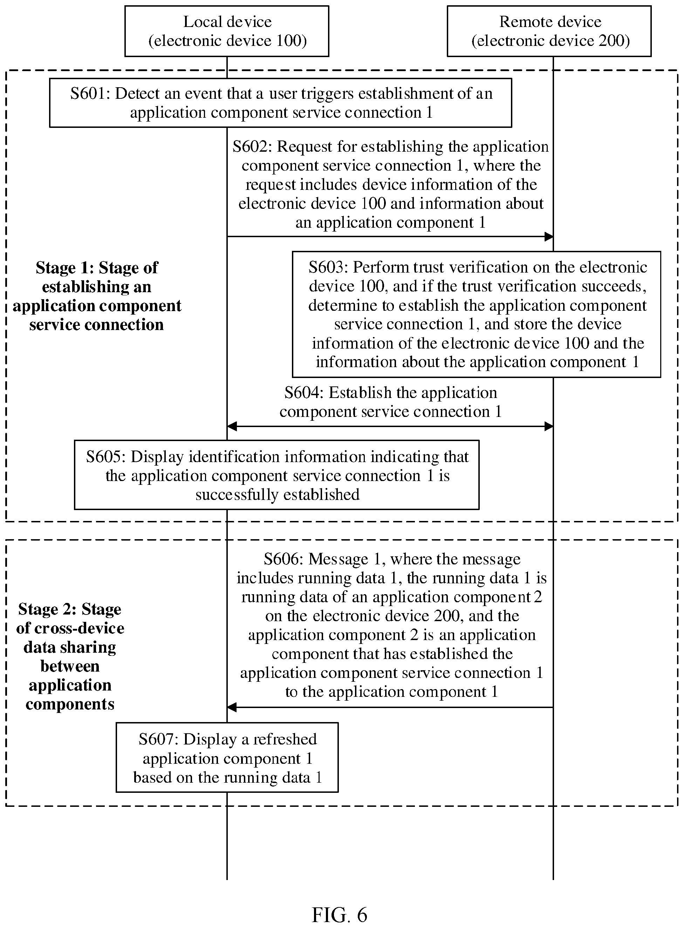

In the first aspect, the first electronic device may be an electronic device 100, the second electronic device may be an electronic device 200, the first user interface may be a desktop, the first connection may be an application component service connection 1 shown in FIG. 6, the first application component may be an application component 1 shown in FIG. 6, the second application component may be an application component 2 shown in FIG. 6, the first message may be a message 1 shown in FIG. 6, the first data may be running data 1 (to be specific, running data of the application component 2 on the electronic device 200) shown in FIG. 6, the first content (for example, related content corresponding to a course task displayed in an application component shown in FIG. 4F) may be generated based on the first data, the first identifier may be an identifier 451, the first operation may be a touch-and-hold operation, the first window may be a window 460 shown in FIG. 4J, the first option may be an option 462, the second operation may be a tap operation, the second option may be an option 461, the third operation may be a tap operation, the second message may be a message indicating that running data of the second application component changes, the second data may be changed running data of the second application component, the second content (for example, related content corresponding to a course task displayed in an application component shown in FIG. 4H) may be generated based on the second data, the fourth operation may be an operation of triggering, by a user, display of a list of device information expected to be synchronized, the second window may be a window 440 shown in FIG. 4D, the fifth operation may be a tap operation, and the first request may be a request for establishing the first connection.

According to a second aspect, an embodiment of this application provides an application component interaction method, applied to a second electronic device. The method includes: The second electronic device receives a first request sent by a first electronic device, where the first request is used to request the second electronic device to establish a first connection to the first electronic device. The second electronic device establishes the first connection to the first electronic device. The second electronic device sends a first message to the first electronic device based on the first connection, where the first message includes first data, the first data is used by the first electronic device to display first content in a first application component, the first application component is an application component of the first electronic device, the first data is generated by the second electronic device by running a second application component, and the first connection is a connection between the first application component and the second application component.

In a possible implementation, the first request includes device information of the first electronic device and information about the first application component, and before the second electronic device establishes the first connection to the first electronic device, the method further includes: The second electronic device performs verification based on the device information of the first electronic device and the information about the first application component, and the second electronic device establishes the first connection to the first electronic device when the verification succeeds.

In this way, the first connection is established when the verification succeeds, so that security can be improved.

In a possible implementation, after the second electronic device sends a first message to the first electronic device based on the first connection, the method further includes: The second electronic device sends a second message to the first electronic device based on the first connection, where the second message includes second data, the second data is generated by the second electronic device by running the second application component after the second electronic device generates the first data, the second data is different from the first data, and the second data is used by the first electronic device to display second content in the first application component.

In the second aspect, the first electronic device may be an electronic device 100, the second electronic device may be an electronic device 200, the first connection may be an application component service connection 1 shown in FIG. 6, the first application component may be an application component 1 shown in FIG. 6, the second application component may be an application component 2 shown in FIG. 6, the first message may be a message 1 shown in FIG. 6, the first data may be running data 1 (to be specific, running data of the application component 2 on the electronic device 200) shown in FIG. 6, the first content (for example, related content corresponding to a course task displayed in an application component shown in FIG. 4F) may be generated based on the first data, the second message may be a message indicating that running data of the second application component changes, the second data may be changed running data of the second application component, the second content (for example, related content corresponding to a course task displayed in an application component shown in FIG. 4H) may be generated based on the second data, and the first request may be a request for establishing the first connection.

According to a third aspect, an embodiment of this application provides an application component interaction method, applied to a first electronic device. The method includes: A first electronic device displays a first user interface, where the first user interface includes a first application component, and the first application component is an application component of the first electronic device. The first electronic device establishes a first connection to a second electronic device. The first electronic device detects a first operation performed by a user on the first application component. The first electronic device sends a first message to the second electronic device based on the first connection in response to the first operation, where the first message includes a first control command, and the first control command instructs the second electronic device to respond to the first control command.

According to the implementation of the method provided in the third aspect, when a communication connection is established between a local device and a remote device, the local device may synchronize a control command of a user for an application component on the local device to the remote device, so that the remote device performs a task corresponding to the control command. In this way, the user may perform an operation on the application component on the local device to conveniently control the remote device to perform a corresponding task. This implements cross-device control command synchronization between application components. A control behavior of the user on the local device may be directly synchronized to the remote device, so that the remote device presents control effect achieved by the control behavior of the user on the local device. This simplifies user operations and improves user experience.

In a possible implementation, the first connection is a connection between the first application component and a second application component, and the second application component is an application component of the second electronic device.

In this way, a control command may be subsequently transmitted between the first application component and the second application component based on the connection.

In a possible implementation, that the first electronic device sends a first message to the second electronic device based on the first connection specifically includes: The first electronic device sends the first message to the second application component based on the first connection, where the first control command instructs the second application component to respond to the first control command.

In a possible implementation, after the first electronic device establishes the first connection to the second electronic device, the method further includes: The first electronic device displays a first identifier in the first application component, where the first identifier indicates a status of the first connection, and a display mode of the first identifier in a case in which the first connection is in a connected state is different from a display mode of the first identifier in a case in which the first connection is in a disconnected state.

In this way, a user may learn of, based on different display modes of the first identifier, whether the first connection is in the connected state or the disconnected state.

In a possible implementation, after the first electronic device displays the first identifier in the first application component, the method further includes: The first electronic device detects a second operation performed by a user on the first identifier. The first electronic device displays a first window in response to the second operation, where the first window includes a first option. The first electronic device detects a third operation performed by the user on the first option. The first electronic device deletes the first connection in response to the third operation.

In this way, the user may actively delete the first connection. After the first connection is deleted, the first connection is interrupted.

In a possible implementation, when the first connection is in the disconnected state, the first window further includes a second option, and before the first electronic device detects the third operation performed by the user on the first option, the method further includes: The first electronic device detects a fourth operation performed by the user on the second option, and the first electronic device re-establishes the first connection to the second electronic device in response to the fourth operation.

In this way, when the first connection is interrupted, the user may actively re-establish the first connection.

In a possible implementation, device information of the second electronic device is displayed on the first identifier.

In this way, the user may learn of a specific electronic device to which the first electronic device establishes the first connection.

In a possible implementation, before the first electronic device establishes the first connection to the second electronic device, the method further includes: The first electronic device detects a fifth operation performed by the user. The first electronic device displays a second window in response to the fifth operation, where the second window includes one or more options, and the one or more options include an option corresponding to the device information of the second electronic device. The first electronic device detects a sixth operation performed by the user on the option corresponding to the device information of the second electronic device. The first electronic device sends a first request to the second electronic device in response to the sixth operation, where the first request is used to request the second electronic device to establish the first connection to the first electronic device.

In this way, the user may actively select an electronic device to which the first electronic device is to establish the first connection.

In a possible implementation, one or more image shooting options are displayed in the first application component, the one or more image shooting options include a photographing option, the first operation is a tap operation performed by the user on the photographing option, the first control command instructs the second electronic device to start a camera application to enter a photographing mode, and after the first electronic device detects the first operation performed by the user on the first application component, the method further includes: The first electronic device displays a third window in the first application component in response to the first operation, where the third window includes a shutter option. The first electronic device detects a seventh operation performed by the user on the shutter option. The first electronic device sends a second message to the second electronic device based on the first connection in response to the seventh operation, where the second message includes a second control command, and the second control command instructs the second electronic device to perform a photographing operation. The first electronic device receives, based on the first connection, a first image sent by the second electronic device, and displays the first image, where the first image is generated by the second electronic device after the second electronic device performs the photographing operation.

In this way, when the first application component is an application component with a photographing function, the second electronic device may be controlled to start the camera application to enter the photographing mode, and perform the photographing operation.

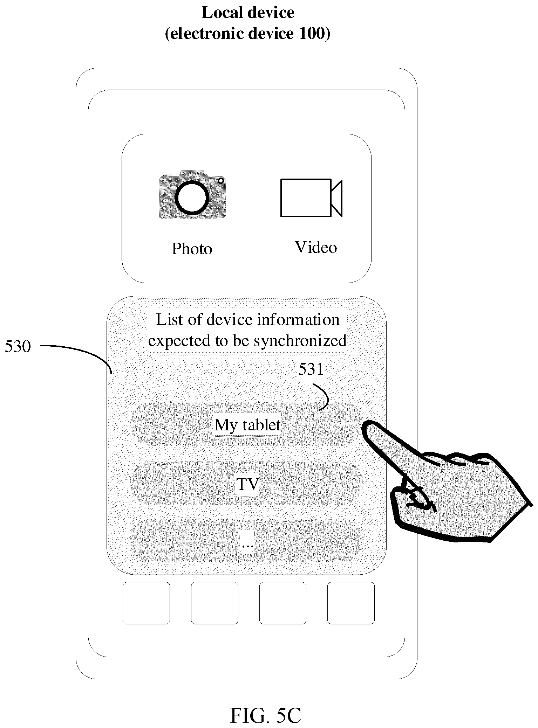

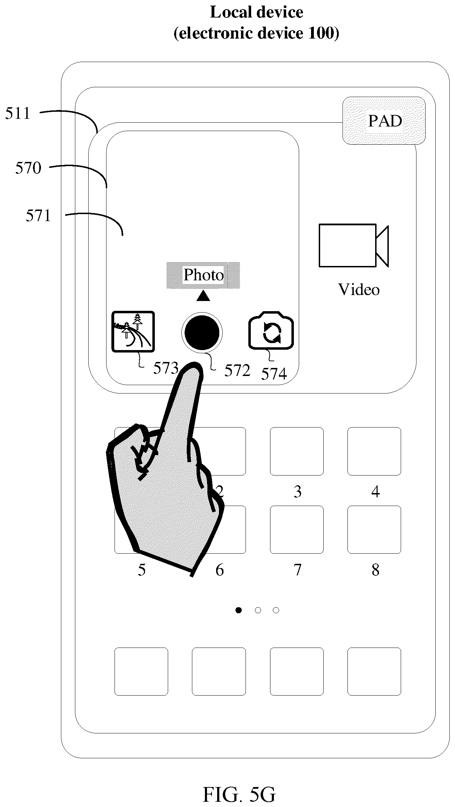

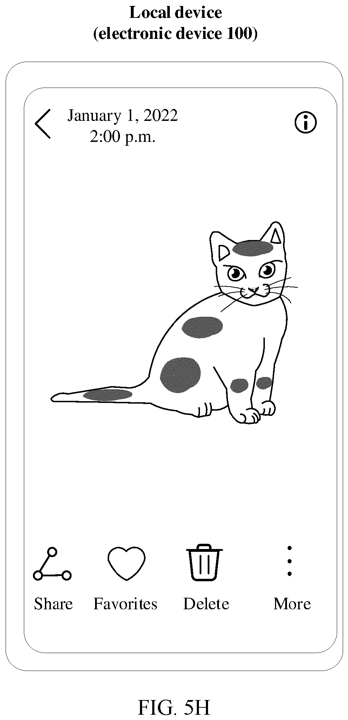

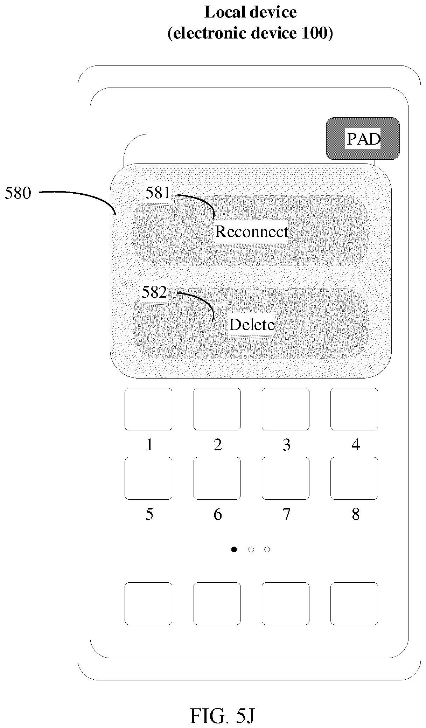

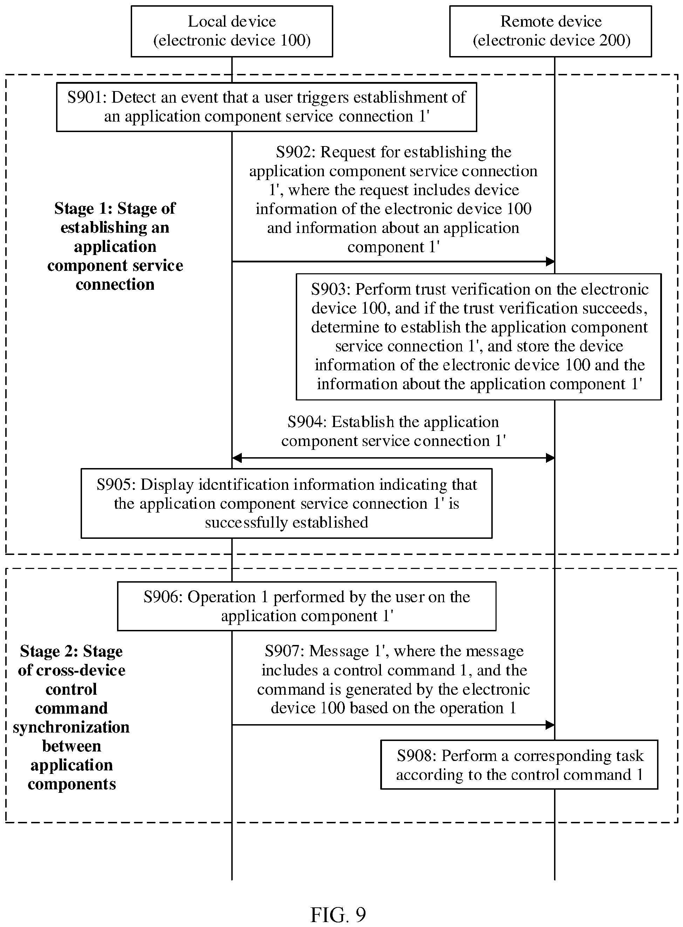

In the third aspect, the first electronic device may be an electronic device 100, the second electronic device may be an electronic device 200, the first user interface may be a desktop, the first connection may be an application component service connection 1' shown in FIG. 9, the first application component may be an application component 1' shown in FIG. 9, the second application component may be an application component providing a same function as that of the application component 1', the first operation may be an operation 1 shown in FIG. 9, the first message may be a message 1' shown in FIG. 9, the first control command may be a control command 1 shown in FIG. 9, the first identifier may be an identifier 541, the second operation may be a touch-and-hold operation, the first window may be a window 580 shown in FIG. 5J, the first option may be an option 582, the third operation may be a tap operation, the second option may be an option 581, the fourth operation may be a tap operation, the fifth operation may be an operation of triggering, by the user, display of a list of device information expected to be synchronized, the second window may be a window 530 shown in FIG. 5C, the sixth operation may be a tap operation, the first request may be a request for establishing the first connection, the third window may be a window 570 shown in FIG. 5G, the seventh operation may be a tap operation, the second message may be a message for controlling the second electronic device to perform the photographing operation, the second control command may be a command for instructing the second electronic device to perform the photographing operation, and the first image may be an image (for example, an image shown in FIG. 5H) generated by the second electronic device after the second electronic device performs the photographing operation.

According to a fourth aspect, an embodiment of this application provides an application component interaction method, applied to a second electronic device. The method includes: The second electronic device receives a first request sent by a first electronic device, where the first request is used to request the second electronic device to establish a first connection to the first electronic device. The second electronic device establishes the first connection to the first electronic device. The second electronic device receives, based on the first connection, a first control command sent by the first electronic device, where the first control command is generated by the first electronic device after the first electronic device detects a first operation performed by a user on a first application component, and the first application component is an application component of the first electronic device. The second electronic device responds to the first control command.

In a possible implementation, the first connection is a connection between the first application component and a second application component, and the second application component is an application component of the second electronic device.

In this way, a control command may be subsequently transmitted between the first application component and the second application component based on the connection.

In a possible implementation, that the second electronic device receives, based on the first connection, a first control command sent by the first electronic device specifically includes: The second application component receives, based on the first connection, the first control command sent by the first electronic device. That the second electronic device responds to the first control command specifically includes: The second application component responds to the first control command.

In a possible implementation, the first request includes device information of the first electronic device and information about the first application component, and before the second electronic device establishes the first connection to the first electronic device, the method further includes: The second electronic device performs verification based on the device information of the first electronic device and the information about the first application component, and the second electronic device establishes the first connection to the first electronic device when the verification succeeds.

In this way, the first connection is established when the verification succeeds, so that security can be improved.

In a possible implementation, one or more image shooting options are displayed in the first application component, the one or more image shooting options include a photographing option, the first operation is a tap operation performed by the user on the photographing option, the first control command instructs the second electronic device to start a camera application to enter a photographing mode, and that the second electronic device responds to the first control command specifically includes: The second electronic device starts the camera application by using the second application component, and displays a first user interface, where the first user interface is a user interface of the camera application, the first user interface includes a first preview frame, and the first preview frame includes a first image; or the second electronic device displays a first window in the second application component, where the first window includes a second preview frame, and the second preview frame includes a first image. After the second electronic device responds to the first control command, the method further includes: The second electronic device receives, based on the first connection, a second control command sent by the first electronic device, where the second control command instructs the second electronic device to perform a photographing operation. The second electronic device performs the photographing operation in response to the second control command, and sends the first image to the first electronic device.

In this way, when the first application component is an application component with a photographing function, the second electronic device may be controlled to start the camera application to enter the photographing mode, and perform the photographing operation.

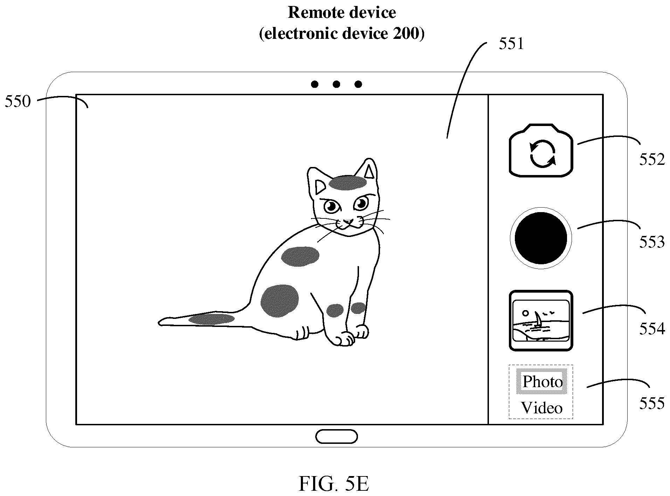

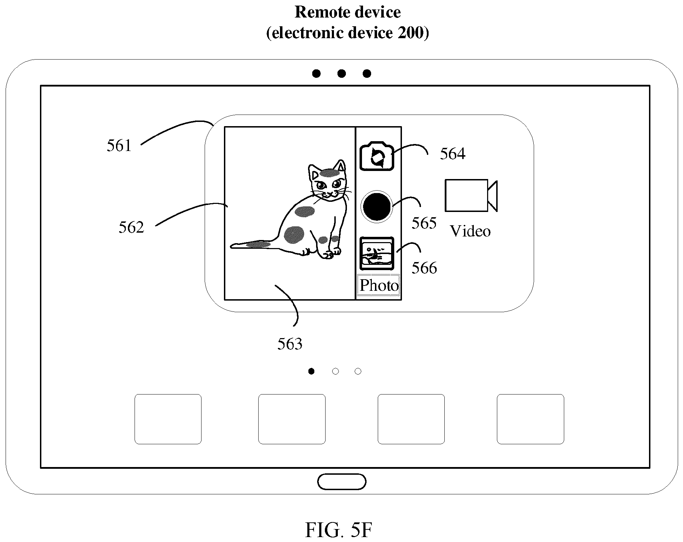

In the fourth aspect, the first electronic device may be an electronic device 100, the second electronic device may be an electronic device 200, the first request may be a request for establishing the first connection, the first connection may be an application component service connection 1' shown in FIG. 9, the first control command may be a control command 1 shown in FIG. 9, the first application component may be an application component 1' shown in FIG. 9, the second application component may be an application component providing a same function as that of the application component 1', the first operation may be an operation 1 shown in FIG. 9, the first user interface may be a user interface shown in FIG. 5E, the first preview frame may be a preview frame 551 shown in FIG. 5E, the first image may be an image in the first preview frame, the first window may be a window 562 shown in FIG. 5F, the second preview frame may be a preview frame 563, the first image may be an image in the second preview frame, and the second control command may be a command for instructing the second electronic device to perform the photographing operation.

According to a fifth aspect, an embodiment of this application provides a communication system. The communication system includes a first electronic device and a second electronic device. The first electronic device is configured to display a first user interface, where the first user interface includes a first application component, and the first application component is an application component of the first electronic device. The first electronic device is further configured to send a first request to the second electronic device, where the first request is used to request the second electronic device to establish a first connection to the first electronic device. The second electronic device is configured to receive the first request, and establish the first connection to the first electronic device. The second electronic device is further configured to send a first message to the first electronic device based on the first connection, where the first message includes first data, and the first data is generated by the second electronic device by running a second application component. The first electronic device is further configured to generate first content based on the first data, and display the first content in the first application component. The first connection is a connection between the first application component and the second application component.

According to a sixth aspect, an embodiment of this application provides a communication system. The communication system includes a first electronic device and a second electronic device. The first electronic device is configured to display a first user interface, where the first user interface includes a first application component, and the first application component is an application component of the first electronic device. The first electronic device is further configured to send a first request to the second electronic device, where the first request is used to request the second electronic device to establish a first connection to the first electronic device. The second electronic device is configured to receive the first request, and establish the first connection to the first electronic device. The first electronic device is further configured to detect a first operation performed by a user on the first application component. The first electronic device is further configured to send a first message to the second electronic device based on the first connection, where the first message includes a first control command. The second electronic device is further configured to respond to the first control command.

According to a seventh aspect, an embodiment of this application provides an electronic device. The electronic device includes one or more processors and one or more memories. The one or more memories are coupled to the one or more processors. The one or more memories are configured to store computer program code. The computer program code includes computer instructions. When the one or more processors execute the computer instructions, the electronic device is enabled to perform the method according to any one of the possible implementations of the first aspect, the second aspect, the third aspect, or the fourth aspect.

According to an eighth aspect, an embodiment of this application provides a computer storage medium. The computer storage medium stores a computer program. The computer program includes program instructions. When the program instructions are run on an electronic device, the electronic device is enabled to perform the method according to any one of the possible implementations of the first aspect, the second aspect, the third aspect, or the fourth aspect.

According to a ninth aspect, an embodiment of this application provides a computer program product. When the computer program product is run on a computer, the computer is enabled to perform the method according to any one of the possible implementations of the first aspect, the second aspect, the third aspect, or the fourth aspect.

### BRIEF DESCRIPTION OF DRAWINGS

FIG. 1 is a diagram of an application component displayed on a desktop of a local device according to an embodiment of this application;
FIG. 2 is a diagram of a communication system according to an embodiment of this application;
FIG. 3A is a diagram of a software architecture of a local device according to an embodiment of this application;
FIG. 3B is a diagram of a software architecture of another local device according to an embodiment of this application;
FIG. 4A to FIG. 4L are diagrams of a group of user interfaces displayed when an application component interaction method is implemented in a "data sharing" scenario according to an embodiment of this application;
FIG. 5A to FIG. 5L are diagrams of a group of user interfaces displayed when an application component interaction method is implemented in a "control command synchronization" scenario according to an embodiment of this application;
FIG. 6 is a schematic flowchart of an application component interaction method implemented in a "data sharing" scenario according to an embodiment of this application;
FIG. 7 is a diagram of a possible collaboration mode between internal modules of a local device and a remote device during establishment of an application component service connection according to an embodiment of this application;
FIG. 8 is a diagram of a possible collaboration mode between internal modules of a local device and a remote device during cross-device data sharing between application components according to an embodiment of this application;
FIG. 9 is a schematic flowchart of an application component interaction method implemented in a "control command synchronization" scenario according to an embodiment of this application;
FIG. 10 is a diagram of a possible collaboration mode between internal modules of a local device and a remote device during cross-device control command synchronization between application components according to an embodiment of this application; and
FIG. 11 is a diagram of a structure of a local device (an electronic device 100) according to an embodiment of this application.

### DESCRIPTION OF EMBODIMENTS

The following clearly and completely describes technical solutions in embodiments of this application with reference to accompanying drawings in embodiments of this application. In descriptions of embodiments of this application, "/" indicates "or", unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists. In addition, in descriptions of embodiments of this application, "a plurality of" means two or more than two.

It should be understood that the terms "first", "second", and the like in this specification, the claims, and the accompanying drawings of this application are intended to distinguish between different objects, but not to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application indicates that a particular feature, structure, or characteristic described with reference to the embodiment may be included in at least one embodiment of this application. The phrase appearing in various locations in this specification does not necessarily mean a same embodiment, and neither means an independent or alternative embodiment mutually exclusive with another embodiment. It is explicitly and implicitly understood by persons skilled in the art that embodiments described in this application may be combined with other embodiments.

The term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language such as Java or an extensible markup language (extensible markup language, XML). Interface source code is parsed and rendered on an electronic device, and is finally presented as user-recognizable content. The user interface is usually represented in a form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a widget that is displayed on a display of the electronic device.

For ease of understanding, a concept of "application component" in embodiments of this application is first described.

An application component (Application Widget, App Widget) may also be referred to as a card, a service card, a service component (Service Widget), an application widget, or an application mini-component, and is a mini-window or a mini-component provided by a service module A (a service end, for example, an application) of an electronic device on an interface of a module B (a host end, for example, a desktop). An application component is usually used to display important information of an application (Application) on a desktop of an electronic device to implement a service feature of the application. A user may use the application component through shortcut gestures to implement one-step direct service experience and reduce hierarchical redirections.

An application component is an interface display form, and is usually independently customized by a third party (for example, an application developer), to be specific, is customized independently of an application corresponding to the application component. An application component may be embedded into another application and displayed as a part of an interface of the application. For example, a user (for example, a desktop application) may be allowed to embed an application component into an interface of the user (for example, an activity component is embedded into an Android operating system) for display. To be specific, for any application, an application component corresponding to the application is independent of the application. To be specific, the application component corresponding to the application is not an application interface of the application, but the application component corresponding to the application may exchange data with the application, to update or add important information, operations, or the like of the application to the application component. This implements direct service experience and simplifies an experience hierarchy. For example, an application component configured based on an Android operating system may be referred to as an ongoing card (ongoing card), and an application component configured based on a HarmonyOS may be referred to as a service card, for example, form ability (FA).

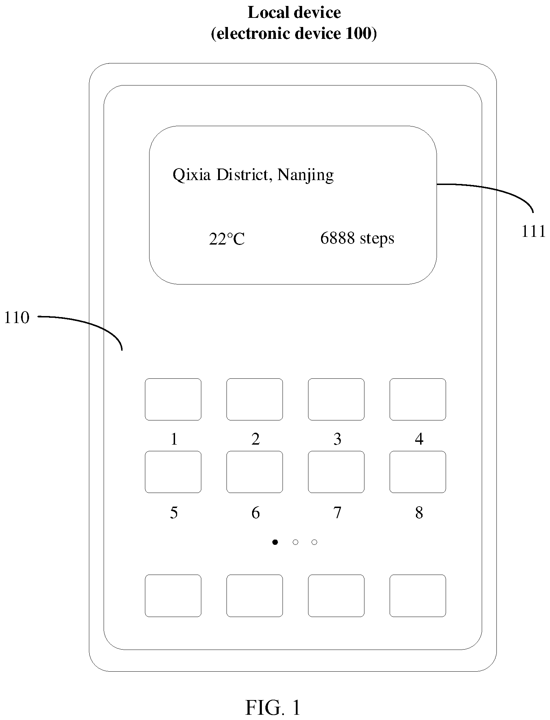

FIG. 1 shows an example application component that is provided by an electronic device 100 and that is displayed on a user interface 110 (namely, a desktop). Usually, one or more types of information may be displayed in an application component. It can be learned from FIG. 1 that three types of information are displayed in the application component 111: location information (for example, Qixia District, Nanjing), temperature information (for example, 22°C), and movement steps information (for example, 6888 steps). In this way, with the application component displayed on the desktop, a user can directly view the information displayed in the application component, and does not need to enter an application that provides the application component to view the information. This is convenient. In addition, the user may further directly tap the application component to enter the application that provides the application component to view more detailed information or perform another task.

The application component is merely a term used in embodiments of this application, a meaning represented by the application component has been described in embodiments of this application, and a name of the application component does not constitute any limitation on embodiments of this application.

Currently, application components on different electronic devices are independent of each other. Usually, an application component can be used only on a local device, data cannot be shared between application components across devices, and control cannot be performed across devices either. For example, data displayed in an application component can only be data generated by a local device by running the application component, and running data of an application component on a remote device (for example, reading progress data of an application component on a tablet computer, or video progress data of an application component on Huawei Vision) cannot be synchronized to the application component on the local device (for example, a mobile phone). For another example, a user can control only an application component on a local device, and cannot control a remote device by using the application component on the local device.

To be specific, currently, user experience of cross-device data synchronization and direct control behavior sharing between application components is absent, and there is no related technical solution to support implementation of cross-device data synchronization and direct control behavior sharing between application components. Consequently, application scenarios of application components are limited, leading to poor user experience.

To address the absence of experience of cross-device data synchronization and control between application components, embodiments of this application provide an application component interaction method. When a communication connection is established between a local device and a remote device, running data of an application component on the remote device may be synchronized to the local device by using a distributed technology. The local device may refresh display of an application component on the local device based on the running data, and may further synchronize a control command of a user for the application component on the local device to the remote device, so that the remote device performs a task corresponding to the control command. In this way, regardless of under a near-field network communication condition or a far-field network communication condition, an application component can implement distributed experience for a same account or different accounts, to improve user experience.

The following first describes a communication system provided in embodiments of this application.

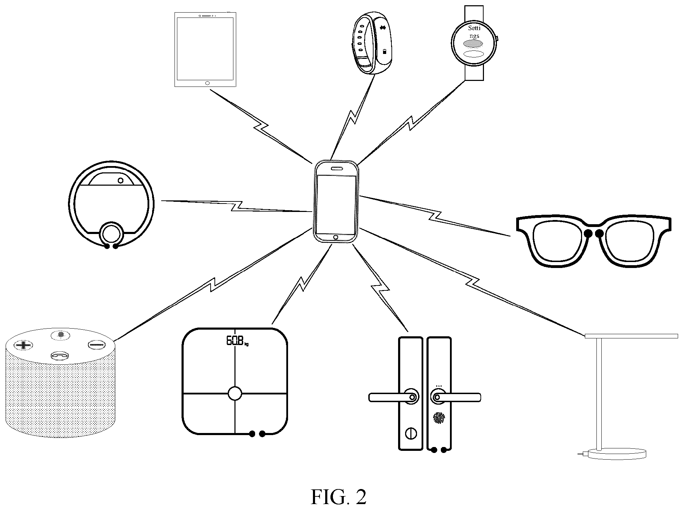

FIG. 2 shows an example communication system according to an embodiment of this application.

As shown in FIG. 2, the communication system may include a plurality of electronic devices. The communication system may also be referred to as a distributed system.

The plurality of electronic devices included in the communication system are all intelligent terminal devices, and may be of various types. Specific types of the plurality of electronic devices are not limited in this embodiment of this application. For example, the plurality of electronic devices may include a mobile phone, may further include a tablet computer, a desktop computer, a laptop computer, a handheld computer, a notebook computer, Huawei Vision, a wearable device, an augmented reality (Augmented Reality, AR) device, a virtual reality (Virtual Reality, VR) device, an artificial intelligence (Artificial Intelligence, AI) device, an in-vehicle infotainment system, a smart headset, or a game console, and may further include an internet of things (Internet of Things, IOT) device, a smart home device such as a smart water heater, a smart lamp, or a smart air conditioner, a smart sports device, a smart medical device such as a blood pressure monitor, or the like.

The plurality of electronic devices in the communication system may be connected to each other by logging in to a same account. For example, the plurality of electronic devices may log in to a same Huawei account, and remotely connect to and communicate with each other through a server. The account may be a mobile phone number, an email address, a custom user name, a user name allocated by an APP server, a user name used for login in an APP on an electronic device, or the like.

The plurality of electronic devices in the communication system may alternatively log in to different accounts but are connected through binding. After an electronic device logs in to an account, the electronic device may be bound, in a device management application, to other electronic devices that have logged in to different accounts or that have not logged in. Then the electronic devices may communicate with each other through the device management application.

The plurality of electronic devices in the communication system may alternatively establish connections to each other by scanning a two-dimensional code, performing near field communication (near field communication, NFC) touch, searching for a Bluetooth device, or the like. This is not limited herein.

Generally, communication connections established between the plurality of electronic devices in the communication system may include but are not limited to a wired connection, a wireless connection such as a Bluetooth (Bluetooth, BT) connection, a wireless local area network (wireless local area network, WLAN) connection such as a wireless fidelity point-to-point (wireless fidelity point-to-point, Wi-Fi P2P) connection, a near field communication (near field communication, NFC) connection, an infrared (infrared, IR) connection, a remote connection (for example, a connection established through a server), and the like.

In addition, the plurality of electronic devices in the communication system may alternatively connect to and communicate with each other by combining any of the foregoing manners. This is not limited in this embodiment of this application. To be specific, the electronic devices in the communication system may constitute a network (in other words, perform networking) according to a specific communication protocol and networking policy, so that the electronic devices in the communication system can communicate with each other.

The plurality of electronic devices in the communication system may be configured with different software operating systems (Operating System, OS), including but not limited to HarmonyOS^{®}, Android^{®}, iOS^{®}, Windows^{®}, Linux^{®}, and the like. HarmonyOS^{®} is HarmonyOS of Huawei. The plurality of electronic devices may be all configured with a same software operating system, for example, HarmonyOS^{®}. When software operating systems on all the plurality of electronic devices are HarmonyOS^{®}, the communication system may be considered as a hyper terminal.

The following describes schematic diagrams of two software architectures of an electronic device 100 provided in embodiments of this application.

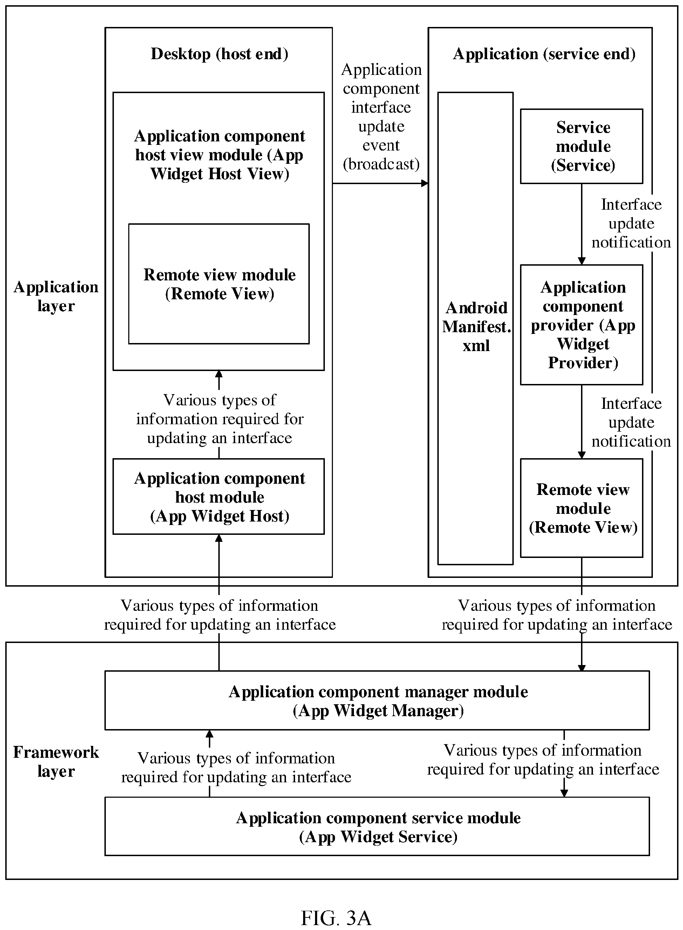

FIG. 3A shows an example software architecture (an Android system is used as an example), related to an application component display process, of an electronic device 100 according to an embodiment of this application.

As shown in FIG. 3A, the electronic device 100 may include an application layer and a framework layer.

The application layer may include a series of applications. As shown in FIG. 3A, the application layer may include a desktop (host end) and a service application (service end) other than the desktop.

The desktop (host end) may include an application component host module (App Widget Host) and an application component host view module (App Widget Host View).

The application component host module is an interface provided by the desktop (host end), and may be configured to support embedding of an application component into the desktop (host end), and may store interface logic information of the application component. The application component host view module includes a remote view module (Remote View). The application component host view module may be configured to display the application component based on a description about the application component in the remote view module. The remote view module may be configured to obtain the interface logic information of the application component that is stored in the application component host module, for the application component host view module to display the application component.

The service application (service end) other than the desktop may include a service module (Service), an application component provider (App Widget Provider), a remote view module (Remote View), an Android Manifest.xml file, and the like.

The service module may be configured to provide a related service required by the application. The application component provider is a broadcast receiver (Broadcast Receiver), and may be configured to receive a broadcast message for updating an application component interface. The remote view module may be configured to describe view information of an application component, for example, various types of information required for updating an application component interface. The Android Manifest.xml file includes configuration information of the application, and may be used to describe modules (for example, the service module, the application component provider, and the remote view module) in the application.

The framework layer provides an application programming interface (application programming interface, API) and a programming framework for the applications at the application layer. The framework layer includes some predefined functions.

As shown in FIG. 3A, the framework layer may include an application component manager module (App Widget Manager), an application component service module (App Widget Service), and the like.

The application component manager module may be configured to provide a channel for exchanging application component data and events between the service end and the host end. The application component service module may be configured to manage application components (for example, load an application component, delete an application component, and process a scheduled event).

Still as shown in FIG. 3A, when an application component interface needs to be updated, the application component host view module of the host end sends an application component interface update event to the service end in a form of a broadcast message. The service end creates a service by using the service module, and sends an interface update notification to the remote view module through the application component provider. The remote view module generates various types of information required for updating the interface, and sends the various types of information required for updating the interface to the application component manager module at the framework layer. The application component manager module invokes some methods provided by the application component service module to send the various types of information required for updating the interface to the application component host module of the host end. The application component host module updates the application component based on the various types of information required for updating the interface, and displays an updated application component interface at the host end through the application component host view module.

It can be learned that the application component manager module at the framework layer provides a channel for exchanging application component data and events between the host end and the service end. An application component is embedded into a container (Container) provided by the host end, to implement automatic display and event processing processes of service end data at the host end. The container is a software program, and may provide a running environment for an application component and manage a lifecycle of the application component.

However, currently, the application component manager module implements only management of application components on a local device, but does not implement cross-device management of application components. In addition, interface logic information of an application component and modules required for event processing processes are packaged in an application package, without being separated from the application package.

Based on the foregoing problems, embodiments of this application provide another software architecture of an electronic device 100.

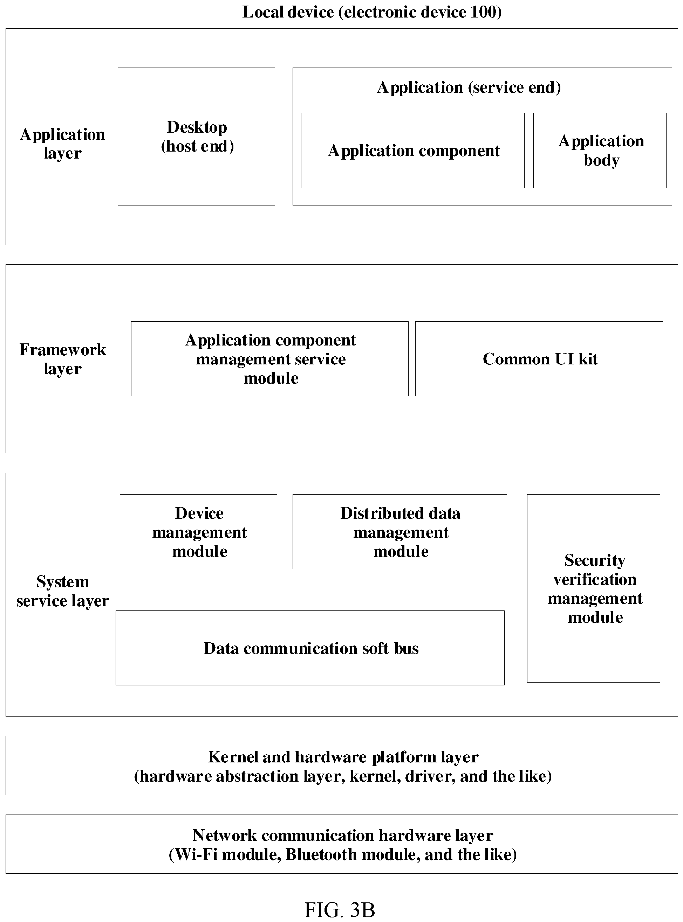

FIG. 3B shows an example software architecture, related to an application component interaction method, of an electronic device 100 according to an embodiment of this application.

As shown in FIG. 3B, the electronic device 100 may include an application layer, a framework layer, a system service layer, a kernel and hardware platform layer, and a network communication hardware layer.

The application layer may include a series of applications. As shown in FIG. 3B, the application layer may include a desktop (host end) and a service application (service end) other than the desktop.

The desktop (host end) may provide a container for accommodating an application component, display an application component, and support embedding and running of an application component on the desktop.

A difference from FIG. 3A lies in that the service application (service end) other than the desktop may include an application component and an application body.

The application component may be installed on the electronic device 100 by using an application component package (which may also be referred to as an installation package of the application component).

The application body may be installed on the electronic device 100 by using an application package (which may also be referred to as an installation package of an application).

To be specific, the application component package is separated from the application package, and the application component package includes only service logic and a service that are related to the application component. In this way, the application component package can be decoupled from the application package and become lightweight, and may be independently installed. Even if an application corresponding to the application component is not installed on the electronic device 100, the application component may still be installed on the electronic device 100.

Because the application component is not an independent user interface program, the application component needs to be embedded in a program (namely, a host end) for running. In this embodiment of this application, the host end of the application component may be a desktop. To be specific, the application component may be embedded in the desktop for running.

It can be understood that, in this embodiment of this application, that the desktop serves as the host end of the application component is merely used as an example, and the host end of the application component may alternatively be another application. This is not limited in this embodiment of this application.

The framework layer provides an application programming interface (application programming interface, API) and a programming framework for the applications at the application layer. The framework layer includes some predefined functions.

As shown in FIG. 3B, the framework layer may include an application component management service module and a common UI kit (common user interface toolkit).

The application component management service module may be invoked by an application component, may further invoke a device management service module to obtain a trusted-device information list, may further provide an API with a related distributed capability (for example, data sharing or control command synchronization) for an application component, and so on.

The common UI kit may be configured to provide UI interaction capabilities in terms of connection, reconnection, device identifier display, running data refresh and display, and the like for an application component in a distributed scenario. This can reduce provisioning workload of an application component service provider, and can also achieve unified UX (User Experience, user experience).

The system service layer is a collection of core capabilities of a system. The system service layer may provide a service for an application at the application layer through the framework layer.

As shown in FIG. 3B, the system service layer may include a device management module, a data communication soft bus, a distributed data management module, and a security verification management module.

The device management module may be configured to manage device information of a local device and device information of one or more remote devices that have established trusted communication connections (or referred to as trusted connections, to be specific, communication connections established to trusted devices) to the local device, may be further configured to provide a related API for an upper-layer module, and so on.

The device information of the one or more remote devices that have established the trusted connections to the local device may be obtained by the device management module through the data communication soft bus.

The data communication soft bus may be configured to provide capabilities of device registration, device discovery, device connection, device communication, and the like based on network connection information.

The distributed data management module may be configured to provide capabilities of cross-device data sharing and control command synchronization and the like.

The security verification management module may be configured to verify authorization of the remote device based on a device certificate, an account, a signature, software version compatibility, and other information, to ensure that the remote device is a trusted device, may be further configured to provide a related API, and so on.

The data communication soft bus may perform device networking based on a plurality of basic network communication protocols by using basic network devices such as a Wi-Fi module and a Bluetooth module, may perform trust verification on an access device (including but not limited to a device that accesses a same local area network as that of a local device, and a device that logs in to a same account as that of the local device) by using the security verification management module and store a trusted-device information list (to be specific, a list of device information of one or more remote devices that have established trusted connections to the local device), may provide a basic service (for example, provide the trusted-device information list) for the device management module, and is a core basic module in an entire cross-device scenario.

As shown in FIG. 3B, the kernel and hardware platform layer may include a hardware abstraction layer (Hardware Abstraction Layer), a kernel, a driver, and the like.

The hardware abstraction layer runs in user space (User Space), encapsulates a kernel layer driver, and provides an interface for an upper layer to invoke.

The kernel layer is a layer between hardware and software. The kernel layer may include a display driver, a camera driver, an audio driver, a sensor driver, a Bluetooth driver, and the like. In some embodiments, the kernel and hardware platform layer may include a kernel abstraction layer (kernel abstraction layer, KAL) and a driver subsystem. The KAL includes a plurality of kernels, such as a kernel of a Linux system, namely, a Linux kernel, and a lightweight internet of things system kernel, namely, LiteOS. The driver subsystem may include a hardware driver foundation (Hardware Driver Foundation, HDF). The hardware driver foundation can provide a unified peripheral access capability and driver development and management framework. The multi-kernel kernel layer may select a corresponding kernel for processing according to a system requirement.

As shown in FIG. 3B, the network communication hardware layer may include hardware such as a Wi-Fi module and a Bluetooth module, and may provide a network connection hardware capability to implement communication between different devices.

It can be understood that FIG. 3A and FIG. 3B are merely examples, and should not be construed as any limitation on the software architecture of the electronic device 100 in embodiments of this application. For example, in some other embodiments of this application, a system architecture of the electronic device 100 may alternatively be a hierarchical structure different from those in the examples shown in FIG. 3A and FIG. 3B, or each layer may alternatively include more or fewer modules, or modules may be combined in a plurality of different manners. This is not limited in embodiments of this application. The electronic device 100 may alternatively include both all or some of the modules shown in FIG. 3A and all or some of the modules shown in FIG. 3B. This is not limited in embodiments of this application.

It is easily understood that a software architecture of another electronic device in embodiments of this application may be the same as or different from the software architecture of the electronic device 100. This is not limited in embodiments of this application.

An application component interaction method provided in embodiments of this application may be implemented based on the software architecture shown in FIG. 3B. The application component interaction method provided in embodiments of this application is mainly applied to the following two scenarios:

### 1. Data sharing scenario

In this scenario, a remote device (for example, an electronic device 200) may synchronize running data of an application component (which may also be referred to as instance data of the application component) to a local device (for example, an electronic device 100), and the local device may refresh display of an interface of an application component on the local device based on the running data. To be specific, running data of the application component on the local device may come from the application component on the remote device. This implements cross-device data sharing between application components.

### 2. Control command synchronization scenario

In this scenario, a local device (for example, an electronic device 100) may synchronize a control command of a user for an application component on the local device to a remote device (for example, an electronic device 200), so that the remote device performs a task corresponding to the control command. To be specific, a user may perform an operation on the application component on the local device to control the remote device to perform a corresponding task. This implements cross-device control command synchronization between application components. A control behavior of the user on the local device may be directly synchronized to the remote device, so that the remote device presents control effect achieved by the control behavior of the user on the local device.

Specific implementation processes of the application component interaction method in the foregoing two scenarios are described in detail in subsequent embodiments. Details are not described herein.

The following first describes in detail a series of user interfaces displayed when the application component interaction method provided in embodiments of this application is implemented in different scenarios.

### 1. Data sharing scenario:

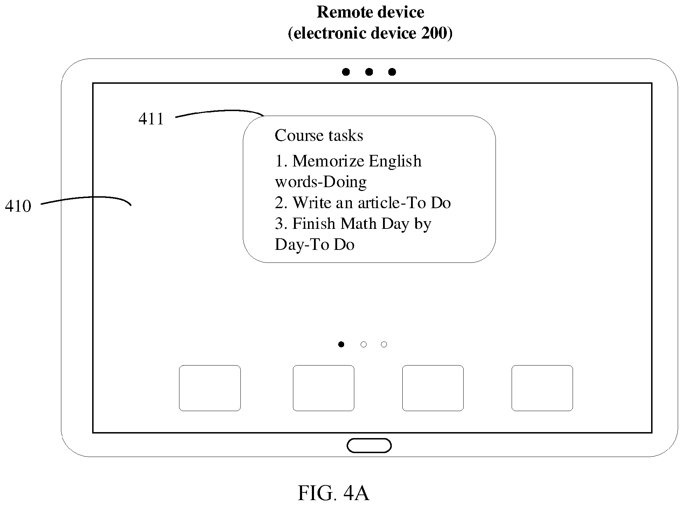

FIG. 4A to FIG. 4L show a series of example user interfaces displayed when an application component interaction method is implemented in a "data sharing" scenario according to an embodiment of this application.

It is assumed that an electronic device 100 (for example, a mobile phone) is a local device and an electronic device 200 (for example, a tablet computer) is a remote device. An example in which the electronic device 200 synchronizes running data of an application component to the electronic device 100 is used for description.

For example, refer to FIG. 4A. A user interface 410 shown in FIG. 4A may be a desktop of the electronic device 200, and the user interface 410 may include one or more application components (for example, an application component 411).

Dynamic information of each application component may be displayed in the application component. The dynamic information of the application component may be information presented by data (to be specific, running data) generated in a process of running the application component by the electronic device 200, and the dynamic information may change with time or a user behavior.

Still as shown in FIG. 4A, an example in which the application component 411 is a "to-do" application component is used. Dynamic information displayed in the application component 411 may include information about a to-do item (for example, a course task) of a user (for example, a name or a completion progress of the to-do item).

For example, it can be learned from FIG. 4A that the user needs to complete three course tasks: memorizing English words, writing an article, and finishing Math Day by Day. Further, information about a completion progress of each course task of the user can be learned from FIG. 4A. For example, Memorize English words-Doing may indicate that the user is performing but has not completed the course task of memorizing English words. For another example, Write an article-To Do may indicate that the user has not started the course task of writing an article. For another example, Finish Math Day by Day-To Do may indicate that the user has not started the course task of finishing Math Day by Day.

If the user wants to synchronize running data of the application component 411 on the electronic device 200 to the electronic device 100, the user first needs to create an application component on the electronic device 100 (for example, add an application component on a desktop of the electronic device 100). It is easily understood that the application component needs to be an application component capable of providing a same function as that of the application component 411 on the electronic device 200 shown in FIG. 4A. For example, if the application component on the electronic device 200 is an application component provided by an application for implementing a specific function, the application component created on the electronic device 100 also needs to be an application component provided by the application for implementing the function. It is easily understood that, if the application component 411 on the electronic device 200 is a "to-do" application component, the application component that the user needs to create on the electronic device 100 is also a "to-do" application component. After the creation is completed, a next operation may be performed to implement cross-device data sharing between application components. Details are described below.

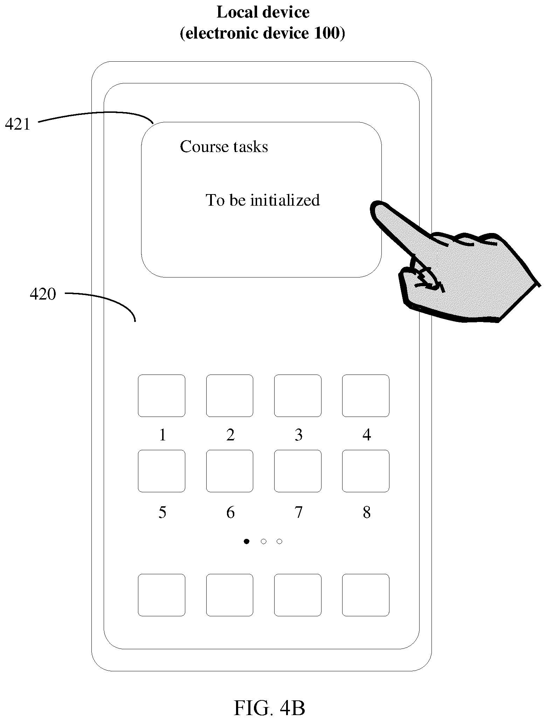

For example, refer to FIG. 4B. A user interface 420 shown in FIG. 4B may be a desktop of the electronic device 100, and the user interface 420 may include one or more application components (for example, an application component 421). The application component 421 may be an application component that is created by the user on the electronic device 100 and that provides a same function as that of the application component 411, for example, a "to-do" application component. Dynamic information displayed in the application component 421 may be information presented by data (to be specific, running data) generated in a process of running the application component by the electronic device 100, and the dynamic information may change with time or a user behavior.

It can be learned from FIG. 4B that the application component 421 is currently in a to-be-initialized state. To be specific, the user has not added information about a to-do item to the application component, and dynamic information displayed in the application component 421 may be considered as empty.

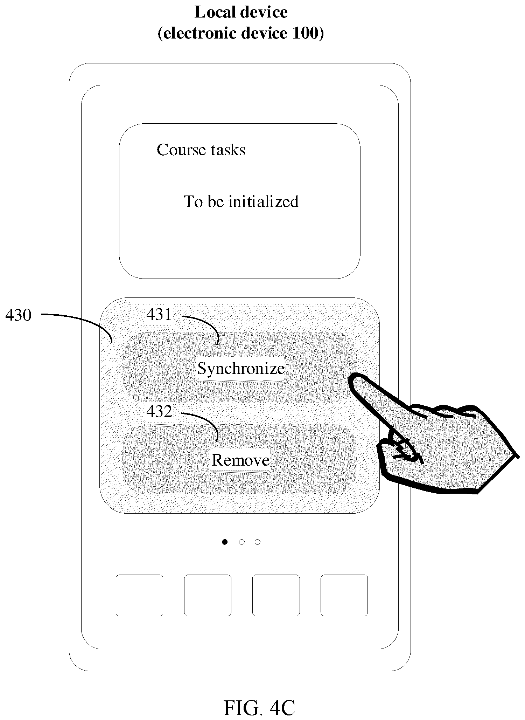

Still as shown in FIG. 4B, if the user wants the electronic device 100 to display, in the application component 421, dynamic information of a "to-do" application component on another electronic device (for example, the electronic device 200), the electronic device 100 may detect an operation (for example, a touch-and-hold operation) performed by the user on the application component 421, and in response to the operation, the electronic device 100 may display an example window 430 shown in FIG. 4C.

As shown in FIG. 4C, the window 430 may include one or more options (for example, an option 431 and an option 432).

The option 431 (for example, a "Synchronize" option) may be used to monitor an operation of triggering synchronization by the user. In response to a detected operation of triggering synchronization by the user, the electronic device 100 may be triggered to display a list of device information expected to be synchronized, to further synchronize running data of a "to-do" application component on an electronic device selected by the user to the electronic device 100, so that the electronic device 100 can display corresponding dynamic information in the application component 421 based on the running data.

The option 432 (for example, a "Remove" option) may be used to remove the application component 421 from the desktop of the electronic device 100.

Still as shown in FIG. 4C, if the user wants the electronic device 100 to display, in the application component 421, dynamic information of a "to-do" application component on another electronic device (for example, the electronic device 200), the electronic device 100 may detect an operation (for example, a tap operation) performed by the user on the option 431, and in response to the operation, the electronic device 100 may display an example window 440 shown in FIG. 4D.

As shown in FIG. 4D, the window 440 may include the list of device information expected to be synchronized, and the list of device information may include options (for example, a "My tablet" option 441 and a "TV" option) corresponding to device information of one or more electronic devices.

The one or more electronic devices may be remote devices that are currently in communication connections to the electronic device 100, or remote devices that previously established communication connections to the electronic device 100 but are currently not in communication connections to the electronic device 100.

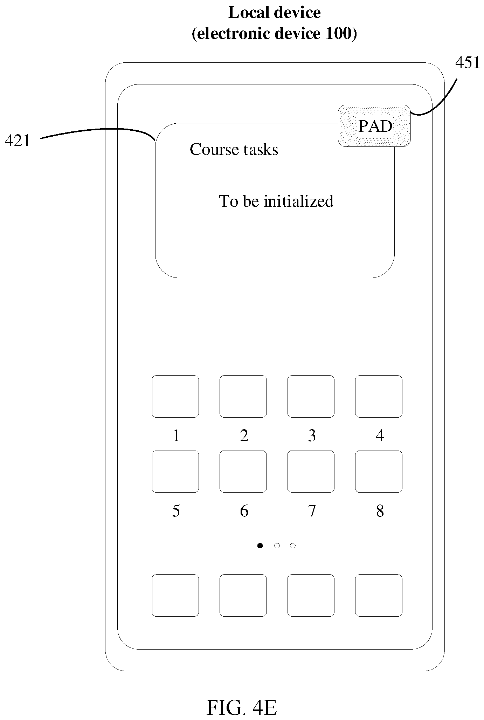

Still as shown in FIG. 4D, it is assumed that the electronic device 200 is "My tablet". If the user wants the electronic device 100 to display, in the application component 421, dynamic information of a "to-do" application component on the electronic device 200, the electronic device 100 may detect an operation (for example, a tap operation) performed by the user on the option 441, and in response to the operation, the electronic device 100 may refresh display of the application component 421. For example, the electronic device 100 may display, in the application component 421, an example identifier 451 shown in FIG. 4E; and the electronic device 100 may further display, in the application component 421, example dynamic information (for example, Memorize English words-Doing, Write an article-To Do, and Finish Math Day by Day-To Do) of the "to-do" application component on the electronic device 200 shown in FIG. 4F.

As shown in FIG. 4F, it can be learned that the dynamic information displayed by the electronic device 100 in the application component 421 is consistent with the dynamic information displayed in the application component 411 on the electronic device 200 shown in FIG. 4A. To be specific, the electronic device 200 has synchronized the running data of the application component 411 to the electronic device 100. In this way, the user can view dynamic information of an application component on the remote device by using the local device, so that user experience is improved.

It is easily understood that the dynamic information, displayed by the electronic device 100 in the application component 421, of the "to-do" application component on the electronic device 200 may be generated by the electronic device 100 based on running data of the "to-do" application component on the electronic device 200, and the running data of the "to-do" application component on the electronic device 200 may be sent by the electronic device 200 to the electronic device 100. Because data sending and processing take a specific time, the electronic device 100 may first display only the identifier 451 shown in FIG. 4E, and after receiving and processing the running data, display, in the application component 421, the dynamic information of the "to-do" application component on the electronic device 200 shown in FIG. 4F.

The identifier 451 may be used to display device information (for example, a device name or a device type) of a running data source, so that the user can learn of a specific electronic device from which the running data comes. For example, the running data comes from the electronic device 200, and the electronic device 200 is "My tablet". In this case, device information (for example, "PAD") of the electronic device 200 may be displayed on the identifier 451.

The identifier 451 may be further used to display a status of establishing an application component service connection between the electronic device 100 and the electronic device 200. For example, a background color of the identifier 451 may be used to indicate a status of the application component service connection. For example, a background color (for example, "green") of the identifier 451 shown in FIG. 4E and FIG. 4F may indicate that the application component service connection is in a "connected" state (to be specific, the connection is successful). In addition to the background color, the status of the application component service connection may alternatively be displayed in another form (for example, a text or a symbol). This is not limited in this embodiment of this application.

In this embodiment of this application, the "establishing an application component service connection between the electronic device 100 and the electronic device 200" may mean establishing a communication connection between the electronic device 100 and the electronic device 200 and establishing an association relationship between an application component (for example, the application component 421) on the electronic device 100 and an application component (for example, the application component 411) on the electronic device 200. Based on the association relationship, running data of an application component may be synchronized to another application component through the communication connection. In this way, dynamic information of an application component on the remote device can be viewed on the local device.

It should be noted that a display mode (for example, a display location or a display style) of the identifier 451 is not limited in this embodiment of this application. For example, the display location of the identifier 451 may be a location in an upper right corner of the application component 421, or may be another location (for example, a location in an upper left corner, a lower right corner, or a lower left corner of the application component 421). For another example, the display style of the identifier 451 may be a rectangular style, or may be another style (for example, an elliptic style or a square style).

When the application component service connection between the electronic device 100 and the electronic device 200 is in the "connected" state, if running data of the application component 411 on the electronic device 200 changes, the electronic device 200 may send changed running data to the electronic device 100 to re-synchronize data, so that the electronic device 100 can update the running data in a timely manner and refresh display of the application component 421 to keep consistent with the electronic device 200.

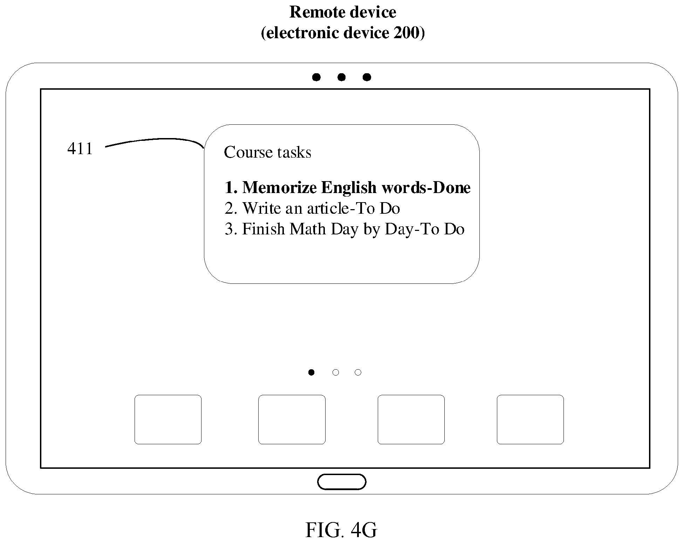

For example, as shown in FIG. 4G, it can be learned that a difference from FIG. 4A lies in that a completion progress of the task "Memorize English words" changes from "Doing" to "Done". To be specific, running data of the application component 411 changes. After the electronic device 200 sends changed running data of the application component 411 to the electronic device 100, the electronic device 100 may refresh display of the application component 421. An example application component 421 shown in FIG. 4H may be a refreshed application component 421 displayed by the electronic device 100. It can be learned that dynamic information displayed by the electronic device 100 in the application component 421 in FIG. 4H is consistent with the dynamic information displayed by the electronic device 200 in the application component 411 in FIG. 4G. In this way, after running data of an application component on the remote device changes, data can still be re-synchronized, so that the local device updates running data in a timely manner and refreshes display of an application component to keep consistent with the remote device.

It is easily understood that, after running data of an application component on the electronic device 200 changes, the electronic device 200 may send all running data of the application component in which the change occurs to the electronic device 100, or may send only changed running data to the electronic device 100 without sending unchanged running data. This is not limited in this embodiment of this application.

In this embodiment of this application, the electronic device 200 may periodically send running data of an application component to the electronic device 100, or may send changed running data of an application component to the electronic device 100 after detecting that running data of the application component changes. This is not limited in this embodiment of this application.

After the application component service connection between the electronic device 100 and the electronic device 200 is successfully established, if the service connection is interrupted, the electronic device 100 may further display a disconnected state of the service connection, and may support re-establishment of a service connection or deletion of the service connection.

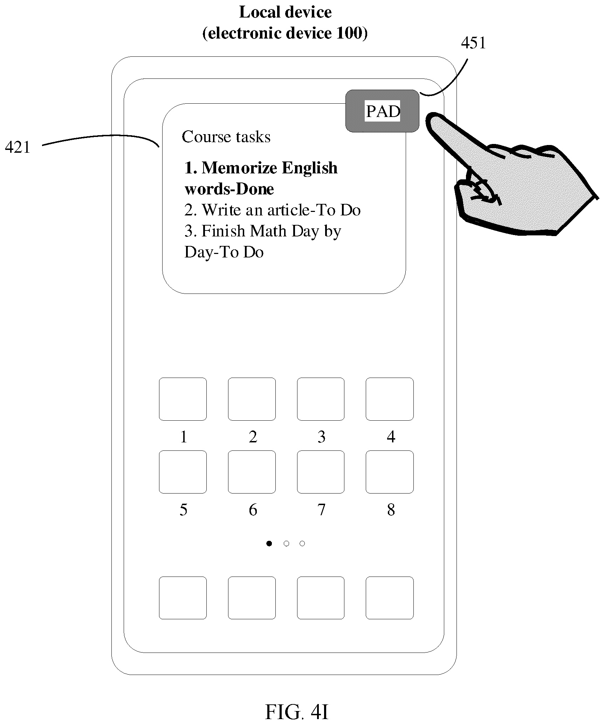

For example, as shown in FIG. 4I, if a network status is interrupted, the status of the application component service connection between the electronic device 100 and the electronic device 200 may change from the "connected" state to a "disconnected" state. In this case, to enable the user to learn of the status of the service connection in a timely manner, the electronic device 100 may refresh display of the identifier 451, for example, may change the background color of the identifier 451 from the background color (for example, "green") in the "connected" state to an example background color (for example, "red") in the "disconnected" state in FIG. 4I. In this embodiment of this application, a display mode of the identifier 451 in the "disconnected" state is not limited to the background color, provided that the user can distinguish the identifier 451 in the "disconnected" state from the identifier 451 in the "connected" state.

As shown in FIG. 4I, the electronic device 100 may detect an operation (for example, a touch-and-hold operation) performed by the user on the identifier 451, and in response to the operation, the electronic device 100 may display an example window 460 shown in FIG. 4J.

As shown in FIG. 4J, the window 460 may include one or more options (for example, an option 461 and an option 462).

The option 461 (for example, a "Reconnect" option) may be used to re-establish an application component service connection between the electronic device 100 and the electronic device 200.

The option 462 (for example, a "Delete" option) may be used to delete the application component service connection established between the electronic device 100 and the electronic device 200.

Still as shown in FIG. 4J, if the user wants the electronic device 100 to re-establish an application component service connection to the electronic device 200, the electronic device 100 may detect an operation (for example, a tap operation) performed by the user on the option 461, and in response to the operation, the electronic device 100 may re-establish an application component service connection to the electronic device 200. After the service connection is successfully established, the electronic device 100 may refresh display of the identifier 451, for example, may refresh display of the background color of the identifier 451 from the example background color (for example, "red") in the "disconnected" state in FIG. 4I to an example background color (for example, "green") in the "connected" state in FIG. 4H. It is easily understood that, after the reconnection is successful, the electronic device 200 may re-synchronize running data of the application component 411 to the electronic device 100.

Still as shown in FIG. 4J, if the user wants to delete the application component service connection established between the electronic device 100 and the electronic device 200, the electronic device 100 may detect an operation (for example, a tap operation) performed by the user on the option 462, and in response to the operation, the electronic device 100 may delete the application component service connection established between the electronic device 100 and the electronic device 200. In addition, as shown in FIG. 4B, display of the identifier 451 in the application component 421 may alternatively be canceled. In addition, dynamic information displayed in the application component 421 may be generated based on data of the application component 421 that is locally run on the electronic device 100, and is no longer generated based on running data of an application component on the remote device (for example, the electronic device 200).

It is easily understood that, when the application component service connection between the electronic device 100 and the electronic device 200 is in the "connected" state, the electronic device 100 may also support deletion of the application component service connection established between the electronic device 100 and the electronic device 200.

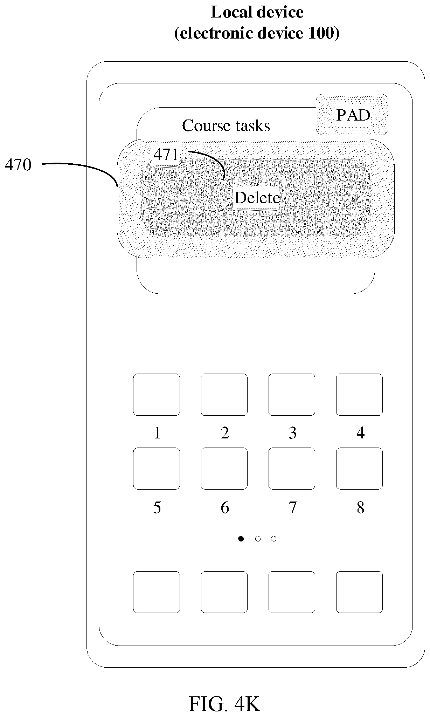

For example, as shown in FIG. 4H, the electronic device 100 may detect an operation (for example, a touch-and-hold operation) performed by the user on the identifier 451, and in response to the operation, the electronic device 100 may display an example window 470 shown in FIG. 4K. The window may include an option 471 (for example, a "Delete" option). Further, the electronic device 100 may detect an operation (for example, a tap operation) performed by the user on the option 471, and in response to the operation, the electronic device 100 may delete the application component service connection established between the electronic device 100 and the electronic device 200.

In some examples, after the status of the application component service connection between the electronic device 100 and the electronic device 200 changes from the "connected" state to the "disconnected" state, the electronic device 100 may alternatively automatically perform reconnection, and the user does not need to actively trigger reconnection. This can simplify user operations. In addition, automatic reconnection can be more convenient when the user does not detect interruption of the service connection in a timely manner.

It should be noted that the "to-do" application component is merely used as an example, and an application component used in the "data sharing" scenario is not limited thereto and may alternatively be another application component. This is not limited in this embodiment of this application.

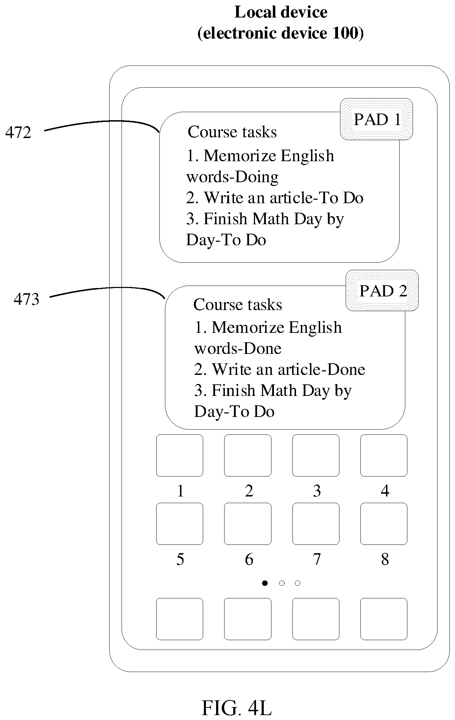

It can be understood that, in the "data sharing" scenario, an electronic device may support synchronizing running data of one application component to another electronic device, or may support synchronizing running data of a plurality of application components to another electronic device. In addition, one electronic device may alternatively receive running data of application components that is synchronized from a plurality of different electronic devices. For example, as shown in FIG. 4L, it can be learned that running data of application components on both a PAD 1 and a PAD 2 may be synchronized to the electronic device 100, dynamic information displayed in an application component 472 may be generated based on running data of an application component on the PAD 1, and dynamic information displayed in an application component 473 may be generated based on running data of an application component on the PAD 2. It is easily understood that the application component 472 and the application component 473 may be two different instantiated application components of a same application component shown in FIG. 4L, or may be two different application components.

### 2. Control command synchronization scenario:

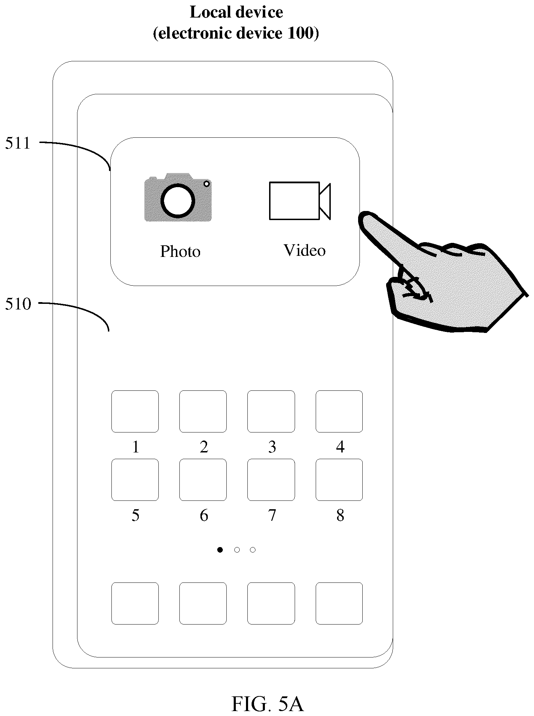

FIG. 5A to FIG. 5L show a series of example user interfaces displayed when an application component interaction method is implemented in a "control command synchronization" scenario according to an embodiment of this application.

It is assumed that an electronic device 100 (for example, a mobile phone) is a local device and an electronic device 200 (for example, a tablet computer) is a remote device. An example in which the electronic device 100 synchronizes a control command of a user for an application component to the electronic device 200 is used for description.

For example, refer to FIG. 5A. A user interface 510 shown in FIG. 5A may be a desktop of the electronic device 100, and the user interface 510 may include one or more application components (for example, an application component 511).

For example, the application component 511 is an application component provided by a "camera" application on the electronic device 100. As shown in FIG. 5A, one or more options (for example, a "Photo" option and a "Video" option) may be displayed in the application component 511.

The "Photo" option may be used to take a photo by using the "camera" application on the electronic device 100.

The "Video" option may be used to record a video by using the "camera" application on the electronic device 100.

It is easily understood that, in the scenario shown in FIG. 5A, the application component 511 can only support the user in controlling the local device to perform a corresponding task (for example, photographing or video recording). If the user wants to control, through an operation on the application component 511, the remote device to perform a corresponding task (for example, photographing or video recording), the electronic device 100 may support the user in performing the following example operations:

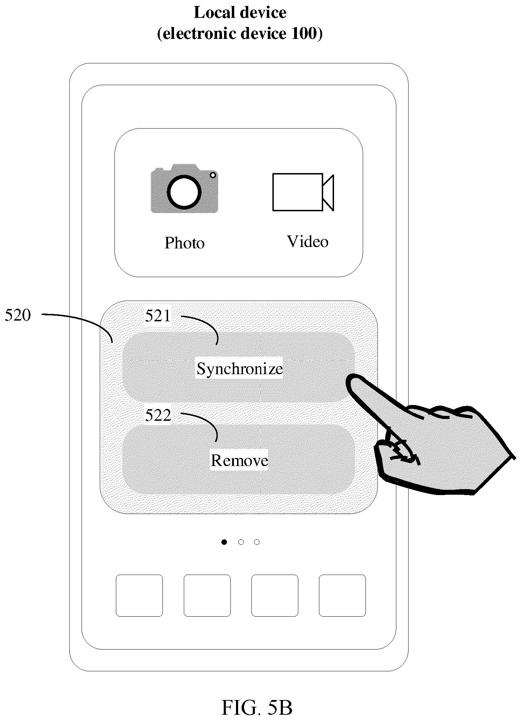

As shown in FIG. 5A, the electronic device 100 may detect an operation (for example, a touch-and-hold operation) performed by the user on the application component 511, and in response to the operation, the electronic device 100 may display an example window 520 shown in FIG. 5B.

As shown in FIG. 5B, the window 520 may include one or more options (for example, an option 521 and an option 522).

The option 521 (for example, a "Synchronize" option) may be used to monitor an operation of triggering synchronization by the user. In response to a detected operation of triggering synchronization by the user, the electronic device 100 may be triggered to display a list of device information expected to be synchronized, to further synchronize a control command to an electronic device selected by the user, so that the electronic device 100 can control another electronic device to perform a corresponding task.

The option 522 (for example, a "Remove" option) may be used to remove the application component 511 from the desktop of the electronic device 100.

Still as shown in FIG. 5B, if the user wants to control, through an operation on the application component 511, the remote device to perform a corresponding task, the electronic device 100 may detect an operation (for example, a tap operation) performed by the user on the option 521, and in response to the operation, the electronic device 100 may display an example window 530 shown in FIG. 5C.

As shown in FIG. 5C, the window 530 may include the list of device information expected to be synchronized, and the list of device information may include options (for example, a "My tablet" option 531 and a "TV" option) corresponding to device information of one or more electronic devices.

The one or more electronic devices may be remote devices that are currently in communication connections to the electronic device 100, or remote devices that previously established communication connections to the electronic device 100 but are currently not in communication connections to the electronic device 100.

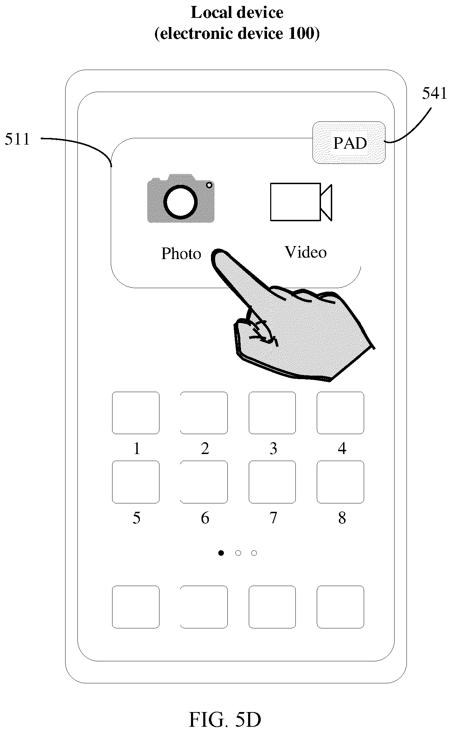

Still as shown in FIG. 5C, it is assumed that the electronic device 200 is "My tablet". If the user wants to control, through an operation on the application component 511, the electronic device 200 to perform a corresponding task, the electronic device 100 may detect an operation (for example, a tap operation) performed by the user on the option 531, and in response to the operation, the electronic device 100 may refresh display of the application component 511. For example, the electronic device 100 may display, in the application component 511, an example identifier 541 shown in FIG. 5D.

The identifier 541 may be used to display device information (for example, a device name or a device type) of a controlled electronic device (to be specific, an electronic device to be controlled by the application component 511), so that the user can learn of a specific electronic device that is the controlled electronic device. For example, the controlled electronic device is the electronic device 200, and the electronic device 200 is "My tablet". In this case, device information (for example, "PAD") of the electronic device 200 may be displayed on the identifier 541.

The identifier 541 may be further used to display a status of establishing an application component service connection between the electronic device 100 and the electronic device 200. For example, a background color of the identifier 541 may be used to indicate a status of the application component service connection. For example, a background color (for example, "green") of the identifier 541 shown in FIG. 5D may indicate that the application component service connection is in a "connected" state (to be specific, the connection is successful). In addition to the background color, the status of the application component service connection may alternatively be displayed in another form (for example, a text or a symbol). This is not limited in this embodiment of this application.

In this embodiment of this application, the "establishing an application component service connection between the electronic device 100 and the electronic device 200" may mean establishing a communication connection between the electronic device 100 and the electronic device 200 and establishing an association relationship between an application component (for example, the application component 511) on the electronic device 100 and an application component (for example, an application component provided by a "camera" application on the electronic device 200) on the electronic device 200. Based on the association relationship, a control command for an application component may be synchronized to another application component through the communication connection. In this way, the remote device can be controlled, through an operation on an application component on the local device, to perform a corresponding task.

It should be noted that a display mode (for example, a display location or a display style) of the identifier 541 is not limited in this embodiment of this application. For example, the display location of the identifier 541 may be a location in an upper right corner of the application component 511, or may be another location (for example, a location in an upper left corner, a lower right corner, or a lower left corner of the application component 511). For another example, the display style of the identifier 541 may be a rectangular style, or may be another style (for example, an elliptic style or a square style).

As shown in FIG. 5D, when the application component service connection between the electronic device 100 and the electronic device 200 is in the "connected" state, the user may control, through an operation on the application component 511, the electronic device 200 to perform a corresponding task (for example, photographing or video recording). In this case, the electronic device 100 may be equivalent to a remote control, and the electronic device 200 may be equivalent to an electronic device controlled by the remote control.

For example, the electronic device 100 controls the electronic device 200 to perform a "photographing" task. The electronic device 100 may detect an operation (for example, a tap operation) performed by the user on the "Photo" option of the application component 511. In response to the operation, the electronic device 100 may send a control command to the electronic device 200. The command may instruct the electronic device 200 to start the "camera" application to enter a photographing mode.

After receiving the control command sent by the electronic device 100, the electronic device 200 may start the "camera" application and display an example user interface 550 shown in FIG. 5E.

The electronic device 200 may start the "camera" application through an application component provided by the "camera" application (to be specific, an application component that has established an application component service connection to the application component 511). The application component may be visible to the user (for example, displayed on a user interface of the electronic device 200), or may be invisible to the user.

As shown in FIG. 5E, the user interface 550 may be a user interface provided by the "camera" application of the electronic device 200. The user interface may include a preview frame 551, a camera flip option 552, a shutter option 553, a gallery shortcut option 554, and a camera mode option 555.

The preview frame 551 may be used to display an image captured by a camera of the electronic device 200 in real time, and the electronic device 200 may refresh displayed content in the preview frame in real time, so that the user can preview an image currently captured by the camera.

The camera flip option 552 may be used to monitor an operation of triggering camera flipping by the user. The electronic device 200 may detect an operation (for example, a tap operation) performed by the user on the camera flip option 552. In response to the operation, the electronic device 200 may flip the camera, for example, switch from a rear-facing camera to a front-facing camera.

The shutter option 553 may be used to monitor an operation of triggering photographing by the user. The electronic device 200 may detect an operation (for example, a tap operation) performed by the user on the shutter option 553. In response to the operation, the electronic device 200 may save an image in the preview frame 551 as a picture in a "gallery" application. In addition, the electronic device 200 may further display a thumbnail of the saved image in the gallery shortcut option 554. The "gallery" application is a picture management application on an electronic device such as a smartphone or a tablet computer, and may also be referred to as an "album". A name of the application is not limited in this embodiment. The "gallery" application may support the user in performing various operations, such as browsing, editing, deleting, and selecting, on a picture stored on the electronic device 200.

The gallery shortcut option 554 may be used to start the "gallery" application. The electronic device 200 may detect an operation (for example, a tap operation) performed by the user on the gallery shortcut option 554. In response to the operation, the electronic device 200 may start the "gallery" application. In this way, the user can conveniently view a captured photo and video without exiting the "camera" application and then starting the "gallery" application.

The camera mode option 555 may include one or more image shooting mode options (for example, a "Photo" option or a "Video" option). The electronic device 200 may detect an operation (for example, a tap operation) performed by the user on an image shooting mode option. In response to the operation, the electronic device 200 may enable an image shooting mode selected by the user. It can be learned that an image shooting mode shown in FIG. 5E is a "photographing" mode.

In some examples, the electronic device 200 may display an application component 561 on a desktop. The application component 561 is similar to the application component 511 on the electronic device 100 (for example, the "Photo" option and the "Video" option that are displayed in the application component 511 may also be displayed in the application component 561), and both may be application components capable of providing an image shooting function. In this case, after receiving the control command sent by the electronic device 100, the electronic device 200 may alternatively not display, in full screen, the example user interface shown in FIG. 5E, but display, in the application component 561, an example window 562 shown in FIG. 5F. The window 562 may be a window for photographing. The window 562 may include a preview frame 563 and a shutter option 565. The preview frame 563 may be used to display an image captured by the camera of the electronic device 200 in real time. The shutter option 565 may be used to monitor an operation of triggering photographing by the user. Optionally, the window 562 may further include a camera flip option 564 and a gallery shortcut option 566. The camera flip option 564 may be used to monitor an operation of triggering camera flipping by the user. The gallery shortcut option 566 may be used to start the "gallery" application.

In some examples, when responding to a control instruction (for example, starting the "camera" application or performing a photographing operation) sent by the electronic device 100, the electronic device 200 may alternatively not display the user interface 550 shown in FIG. 5E or the window 562 shown in FIG. 5F. To be specific, the user interface 550 shown in FIG. 5E or the window 562 shown in FIG. 5F may be invisible to the user.

In this embodiment of this application, the electronic device 100 may control the electronic device 200 to perform the "photographing" task. To be specific, the user only needs to perform an operation on the electronic device 100 to control the electronic device 200 to perform the "photographing" task, without performing an operation on the electronic device 200.

After detecting an operation (for example, a tap operation) performed by the user on the "Photo" option in the application component 511 shown in FIG. 5D, the electronic device 100 may further display a window 570 in the application component 511 when sending the control command to the electronic device 200. The window 570 may be a window for photographing. The window 570 may include a preview frame 571 and a shutter option 572. The preview frame 571 may be used to display an image captured by the camera in real time. The shutter option 565 may be used to monitor an operation of triggering photographing by the user.

In some examples, the electronic device 200 may send, to the electronic device 100, an image captured by the camera of the electronic device 200 in real time, and the electronic device 100 may display, in the preview frame 571, the image captured by the camera of the electronic device 200 in real time, so that the user can view, in real time by using the electronic device 100, the image captured by the camera of the electronic device 200.

Optionally, the window 570 may further include a camera flip option 574 and a gallery shortcut option 573. The camera flip option 574 may be used to monitor an operation of triggering camera flipping by the user. The gallery shortcut option 573 may be used to start a "gallery" application.

If the user wants to capture an image displayed in the preview frame 551 of the electronic device 200 shown in FIG. 5E (or an image displayed in the preview frame 561 of the electronic device 200 shown in FIG. 5F), the electronic device 100 may detect an operation (for example, a tap operation) performed by the user on the shutter option 572 shown in FIG. 5G. In response to the operation, the electronic device 100 may send a control command to the electronic device 200, where the command may instruct the electronic device 200 to perform a photographing operation. After receiving the command, the electronic device 200 may save the image displayed in the preview frame 551 of the electronic device 200 shown in FIG. 5E (or the image displayed in the preview frame 561 of the electronic device 200 shown in FIG. 5F) as a picture in the "gallery" application of the electronic device 200. In this way, effect achieved by tapping the shutter option on the electronic device 100 by the user is the same as that of tapping the shutter option on the electronic device 200 by the user. This achieves an objective of controlling, by the electronic device 100, the electronic device 200 to perform the "photographing" task.

Further, the electronic device 200 may send the captured picture to the electronic device 100 for display. For example, after receiving the picture captured by the electronic device 200, the electronic device 100 may save the picture to the "gallery" application, and may further display a thumbnail of the picture in the gallery shortcut option 573 shown in FIG. 5G. After the user taps the gallery shortcut option 573, the "gallery" application of the electronic device 100 may be started, and an example user interface shown in FIG. 5H is displayed. The user interface may be a user interface provided by the "gallery" application of the electronic device 100. A picture captured by the electronic device 200 may be displayed on the user interface. In this way, the user can view, on the electronic device 100, a picture captured by the electronic device 200 under the control of the electronic device 100.

In this embodiment of this application, the electronic device 100 may further support the user in performing, in the "gallery" application, various operations (for example, sharing, adding to favorites, and deleting) on a picture captured by the electronic device 200.

It is easily understood that the user may further tap the "Video" option in the application component 511 shown in FIG. 5D to enable the electronic device 100 to control the electronic device 200 to perform a "video recording" task. This process is similar to the foregoing process of controlling, by the electronic device 100, the electronic device 200 to perform the "photographing" task. Details are not described herein again.

After the application component service connection between the electronic device 100 and the electronic device 200 is successfully established, if the service connection is interrupted, the electronic device 100 may further display a disconnected state of the service connection, and may support re-establishment of a service connection or deletion of the service connection.

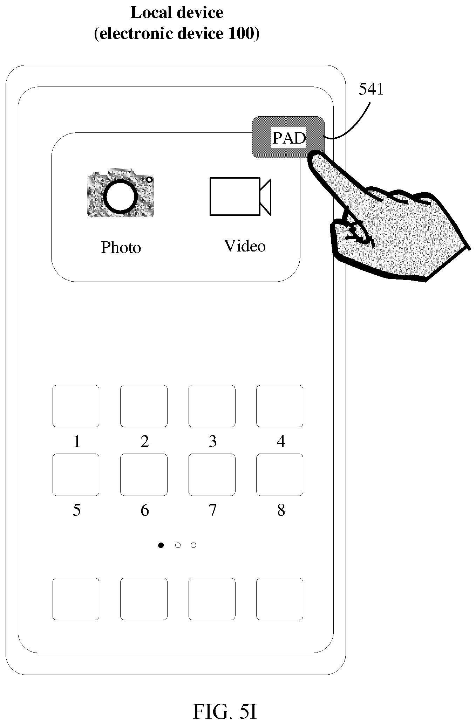

For example, as shown in FIG. 5I, if a network is interrupted, the status of the application component service connection between the electronic device 100 and the electronic device 200 may change from the "connected" state to a "disconnected" state. In this case, to enable the user to learn of the status of the service connection in a timely manner, the electronic device 100 may refresh display of the identifier 541, for example, may change the background color of the identifier 541 from the background color (for example, "green") in the "connected" state to an example background color (for example, "red") in the "disconnected" state in FIG. 5I. In this embodiment of this application, a display mode of the identifier 541 in the "disconnected" state is not limited to the background color, provided that the user can distinguish the identifier 541 in the "disconnected" state from the identifier 541 in the "connected" state.

As shown in FIG. 5I, the electronic device 100 may detect an operation (for example, a touch-and-hold operation) performed by the user on the identifier 541, and in response to the operation, the electronic device 100 may display an example window 580 shown in FIG. 5J.

As shown in FIG. 5J, the window 580 may include one or more options (for example, an option 581 and an option 582).

The option 581 (for example, a "Reconnect" option) may be used to re-establish an application component service connection between the electronic device 100 and the electronic device 200.

The option 582 (for example, a "Delete" option) may be used to delete the application component service connection established between the electronic device 100 and the electronic device 200.

Still as shown in FIG. 5J, if the user wants the electronic device 100 to re-establish an application component service connection to the electronic device 200, the electronic device 100 may detect an operation (for example, a tap operation) performed by the user on the option 581, and in response to the operation, the electronic device 100 may re-establish an application component service connection to the electronic device 200. After the service connection is successfully established, the electronic device 100 may refresh display of the identifier 541, for example, may refresh display of the background color of the identifier 541 from the example background color (for example, "red") in the "disconnected" state in FIG. 5I to an example background color (for example, "green") in the "connected" state in FIG. 5D.

Still as shown in FIG. 5J, if the user wants to delete the application component service connection established between the electronic device 100 and the electronic device 200, the electronic device 100 may detect an operation (for example, a tap operation) performed by the user on the option 582, and in response to the operation, the electronic device 100 may delete the application component service connection established between the electronic device 100 and the electronic device 200. In addition, display of the identifier 541 in the application component 511 may alternatively be canceled. It is easily understood that, after the service connection is deleted, if the user performs an operation on the application component 511 (for example, performs an operation on the "Photo" option or performs an operation on the "Video" option) again, the electronic device 100 can no longer control the electronic device 200 to perform a corresponding task, but controls the electronic device 100 itself to perform a corresponding task.

It is easily understood that, when the application component service connection between the electronic device 100 and the electronic device 200 is in the "connected" state, the electronic device 100 may also support deletion of the application component service connection established between the electronic device 100 and the electronic device 200.

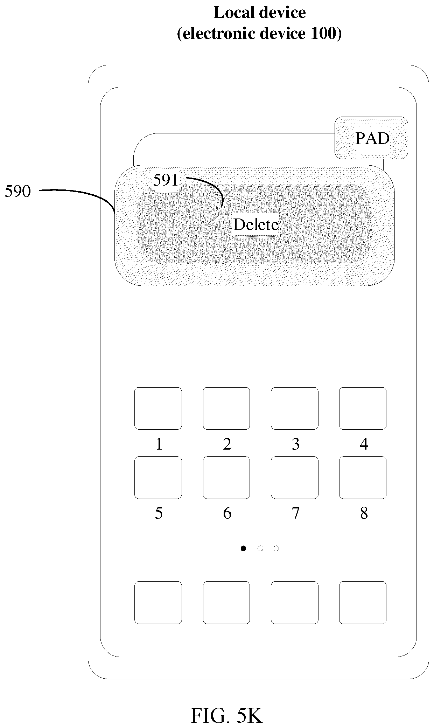

For example, as shown in FIG. 5D, the electronic device 100 may detect an operation (for example, a touch-and-hold operation) performed by the user on the identifier 541, and in response to the operation, the electronic device 100 may display an example window 590 shown in FIG. 5K. The window may include an option 591 (for example, a "Delete" option). Further, the electronic device 100 may detect an operation (for example, a tap operation) performed by the user on the option 591, and in response to the operation, the electronic device 100 may delete the application component service connection established between the electronic device 100 and the electronic device 200.

In some examples, after the status of the application component service connection between the electronic device 100 and the electronic device 200 changes from the "connected" state to the "disconnected" state, the electronic device 100 may alternatively automatically perform reconnection, and the user does not need to actively trigger reconnection. This can simplify user operations. In addition, automatic reconnection can be more convenient when the user does not detect interruption of the service connection in a timely manner.

It can be understood that an application component provided by the "camera" application is used above merely as an example to describe a process of controlling, by the user through an operation on another application component on the local device, the remote device to perform a corresponding task. However, this does not constitute a limitation. The user may alternatively control, through an operation on another application component on the local device, the remote device to perform a corresponding task. This is not limited in this embodiment of this application.

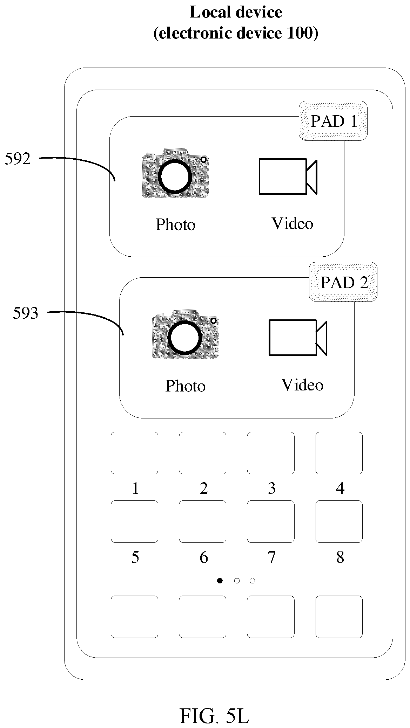

It can be understood that an example in which the user controls, through an operation on one application component on the local device, one remote device to perform a corresponding task is used above. However, this does not constitute a limitation. The user may alternatively control, through operations on a plurality of application components on the local device, a plurality of remote devices to perform corresponding tasks. For example, as shown in FIG. 5L, it can be learned that an application component 592 may be configured to control a PAD 1 to perform a corresponding task, and an application component 593 may be configured to control a PAD 2 to perform a corresponding task. It is easily understood that the application component 592 and the application component 593 may be two different instantiated application components of a same application component shown in FIG. 5L, or may be two different application components.

It should be noted that an example in which all application components are displayed on a desktop of an electronic device is used in the foregoing embodiments of the data sharing scenario and the control command synchronization scenario. However, this does not constitute a limitation. The application components may alternatively be displayed on a leftmost screen or an interface of another application. This is not limited in this embodiment of this application.

With reference to the series of user interfaces in the data sharing scenario and the control command synchronization scenario, the following describes in detail specific processes of possible implementations of the application component interaction method provided in embodiments of this application in the data sharing scenario and the control command synchronization scenario.

### 1. Data sharing scenario:

The following describes a specific implementation process of the application component interaction method provided in embodiments of this application in a "data sharing" scenario.

FIG. 6 shows an example of a specific process of an application component interaction method in a "data sharing" scenario according to an embodiment of this application.

As shown in FIG. 6, the method may be applied to a communication system including an electronic device 100 (namely, a local device, which may also be referred to as a sink device) and an electronic device 200 (namely, a remote device, which may also be referred to as a source device). The following describes in detail specific steps of the method.

First, in this embodiment of this application, an application component service connection needs to be established between the electronic device 100 and the electronic device 200. After an application component service connection is established, steps in the following stage 2 may be further performed to implement cross-device data sharing between application components.

For example, a possible implementation of establishing an application component service connection between the electronic device 100 and the electronic device 200 may be an implementation described in the following stage 1 (step S601 to step S605). Details are described below.

### Stage 1: Stage of establishing an application component service connection

S601 and S602: The electronic device 100 detects an event that a user triggers establishment of an application component service connection 1. In response to the event, the electronic device 100 sends, to the electronic device 200, a request for establishing the application component service connection 1, where the request includes device information of the electronic device 100 and information about the application component 1.

The event that the user triggers establishment of the application component service connection 1 may be an event that the user triggers establishment of an application component service connection between the electronic device 100 and the electronic device 200.

It should be noted that a UX interaction mode for the "event that the user triggers establishment of the application component service connection 1" is not limited in this embodiment of this application. For example, the UX interaction mode may be the example UX interaction mode shown in FIG. 4B to FIG. 4D.

The device information of the electronic device 100 may include but is not limited to a device type, a device name, a key device identifier (for example, a device ID), a serial number, a media access control address, a device model, a connection mode, and the like of the electronic device 100. This is not limited in this embodiment of this application.

The information about the application component 1 may include but is not limited to a package name and a class name of the application component 1. For example, the application component 1 may be the example application component 421 (namely, the "to-do" application component) shown in FIG. 4B. In this case, the package name of the application component 1 may be com.xxx.xxx.note, and the class name of the application component 1 may be com.xxx.xxx.todo.

S603: The electronic device 200 performs trust verification on the electronic device 100, and if the trust verification succeeds, determines to establish the application component service connection 1, and stores the device information of the electronic device 100 and the information about the application component 1.

Specifically, after receiving the request for establishing the application component service connection 1 that is sent by the electronic device 100, the electronic device 200 may perform trust verification on the electronic device 100. Information verified during the trust verification includes but is not limited to a device certificate, a login account, a signature, software version compatibility, and the like of the electronic device 100. Trust authentication may be performed in a plurality of manners. This is not limited in this embodiment of this application.

Further, if the trust verification succeeds, it is determined that the application component service connection 1 can be established.

Further, the electronic device 200 may store the device information of the electronic device 100 and the information about the application component 1 that are included in the request for establishing the application component service connection 1.

S604 and S605: The electronic device 200 establishes the application component service connection 1 to the electronic device 100, and the electronic device 100 displays identification information indicating that the application component service connection 1 is successfully established.

Specifically, after the electronic device 200 determines that the application component service connection 1 can be established, the electronic device 200 may establish the application component service connection 1 to the electronic device 100. After the application component service connection 1 is successfully established, the electronic device 100 may display the identification information indicating that the application component service connection 1 is successfully established. In this way, the user can learn that the electronic device 200 has successfully established the application component service connection 1 to the electronic device 100 and is currently in a "connected" state.

A display mode of the identification information indicating that the application component service connection 1 is successfully established may be the display mode of the example identifier 451 shown in FIG. 4E.

After the electronic device 200 establishes the application component service connection 1 to the electronic device 100, the electronic device 200 may further send a connection success message to the electronic device 100. The message may include device information of the electronic device 200 and information about an application component (to be specific, information about an application component that has established the application component service connection 1 to the application component 1). The device information of the electronic device 200 may include but is not limited to a device type, a device name, a key device identifier (for example, a device ID), a serial number, a media access control address, a device model, a connection mode, and the like of the electronic device 200. This is not limited in this embodiment of this application. The information about the application component may include but is not limited to an ID of the application component (for example, an instantiation ID of the application component) and the like. This is not limited in this embodiment of this application.

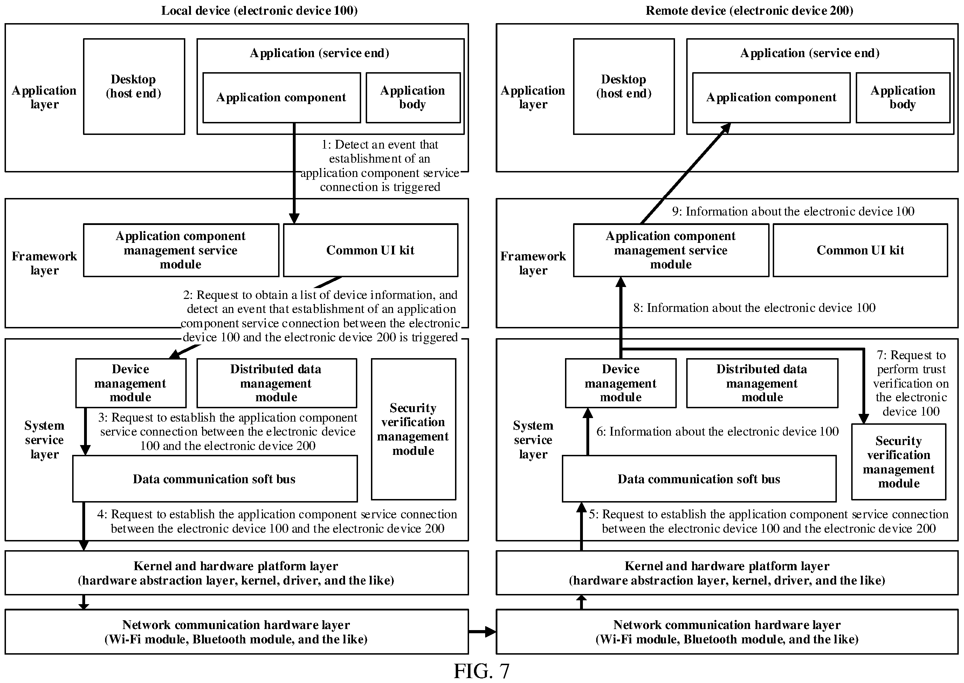

With reference to FIG. 7, the following describes an example of a possible collaboration mode between internal modules of the electronic device 100 and the electronic device 200 in the stage of establishing an application component service connection.

Step 1: An application component of the electronic device 100 may detect, through a common UI kit, an event that establishment of an application component service connection is triggered.

For example, the event that establishment of an application component service connection is triggered may be an event that the user performs an operation on the option 431 shown in FIG. 4C.

Step 2: The common UI kit of the electronic device 100 may invoke a device management module of the electronic device 100, to request to obtain a list of information about connectable devices. After an event that establishment of an application component service connection between the electronic device 100 and the electronic device 200 is triggered (to be specific, the user specifies to establish an application component service connection between the electronic device 100 and the electronic device 200) is detected, the common UI kit of the electronic device 100 may send information about the event to the device management module of the electronic device 100.

Step 3: The device management module of the electronic device 100 may invoke a data communication soft bus of the electronic device 100, to request to establish an application component service connection between the electronic device 100 and the electronic device 200.

Step 4: The data communication soft bus of the electronic device 100 may request, through a kernel and hardware platform layer and a network communication hardware layer of the electronic device 100, to establish a connection to the electronic device 200.

Step 5: A data communication soft bus of the electronic device 200 may receive, through a kernel and hardware platform layer and a network communication hardware layer of the electronic device 200, a connection establishment request sent by the electronic device 100. Then the electronic device 200 may invoke the data communication soft bus of the electronic device 200, to perform a handshake with the electronic device 100 to establish a connection.

Step 6: The data communication soft bus of the electronic device 200 may send information about the electronic device 100 to a device management module of the electronic device 200.

The information about the electronic device 100 may include the device information of the electronic device 100 and the information about the application component 1.

Step 7: The device management module of the electronic device 200 may invoke a security verification management module of the electronic device 200, to request to perform trust verification on the electronic device 100.

Step 8: After the security verification management module of the electronic device 200 successfully performs trust verification on the electronic device 100, the device management module of the electronic device 200 may send the information about the electronic device 100 to an application component management service module of the electronic device 200, so that the application component management service module of the electronic device 200 can perform compatibility verification.

The compatibility verification may be software version compatibility verification, for example, version compatibility verification for the application component 1. Information to be verified in the version compatibility verification for the application component may be included in the information about the application component 1.

After the compatibility verification succeeds, the device management module of the electronic device 200 may store the information about the electronic device 100.

In some examples, the application component management service module of the electronic device 200 may also store the information about the electronic device 100.

In some examples, the device management module of the electronic device 200 may alternatively call back (callback) only the information about the application component 1 that is included in the information about the electronic device 100 to the application component management service module of the electronic device 200.

Step 9: The application component management service module of the electronic device 200 may send the information about the electronic device 100 to an application component of the electronic device 200.

In some examples, the device management module of the electronic device 200 may alternatively call back only the information about the application component 1 that is included in the information about the electronic device 100 to the application component of the electronic device 200.

It is easily understood that the application component of the electronic device 200 is an application component that has established the application component service connection 1 to the application component 1.

In this embodiment of this application, the user may manage a connection status by using an application component. The foregoing content describes a connection establishment process. In addition to connection establishment, re-establishment of a connection (reconnection) after interruption and deletion of a connection may be further supported. It is easily understood that reconnection and connection deletion processes are similar to the foregoing connection establishment process, and details are not described herein again.

In some examples, after a connection is deleted, the electronic device 100 may delete stored information about the electronic device 200 (for example, the device information of the electronic device 200 and information about an application component of the electronic device 200), and the electronic device 200 may also delete stored information about the electronic device 100 (for example, the device information of the electronic device 100 and information about an application component of the electronic device 100).

After an application component service connection is established between the electronic device 100 and the electronic device 200, the electronic device 200 may send running data of an application component to the electronic device 100 based on the service connection, to implement cross-device data sharing between application components.

For example, a possible implementation of cross-device data sharing between application components may be an implementation described in the following stage 2 (step S606 and step S607). Details are described below.

Stage 2: Stage of cross-device data sharing between application components

S606: The electronic device 200 sends a message 1 to the electronic device 100, where the message includes running data 1, the running data 1 is running data of an application component 2 on the electronic device 200, and the application component 2 is an application component that has established the application component service connection 1 to the application component 1.

Specifically, after the application component service connection is established, the electronic device 200 may send the message 1 to the electronic device 100, where the message includes the running data 1. In this way, running data of an application component on the electronic device 200 may be synchronized to the electronic device 100, to implement cross-device data sharing between application components.

For example, the application component 2 may be the application component 411 shown in FIG. 4A, and the application component 1 may be the application component 421 shown in FIG. 4B.

S607: The electronic device 100 displays a refreshed application component 1 based on the running data 1.

Specifically, after receiving the message 1 sent by the electronic device 200, the electronic device 100 may generate, based on the running data 1 included in the message, dynamic information corresponding to an application component, and then display the dynamic information in the application component 1, in other words, display the refreshed application component 1.

For example, the refreshed application component 1 may be the application component 421 shown in FIG. 4F.

According to the implementation of the method provided in the embodiment shown in FIG. 6, a remote device (for example, the electronic device 200) may synchronize running data of an application component to a local device (for example, the electronic device 100) based on a trusted network data communication technology and a distributed data synchronization technology, and the local device may refresh display of an interface of an application component on the local device based on the running data. This implements cross-device data sharing between application components. A user can conveniently synchronize running data of an application component on the remote device to the local device without performing an operation on the remote device. This simplifies user operations and improves user experience.

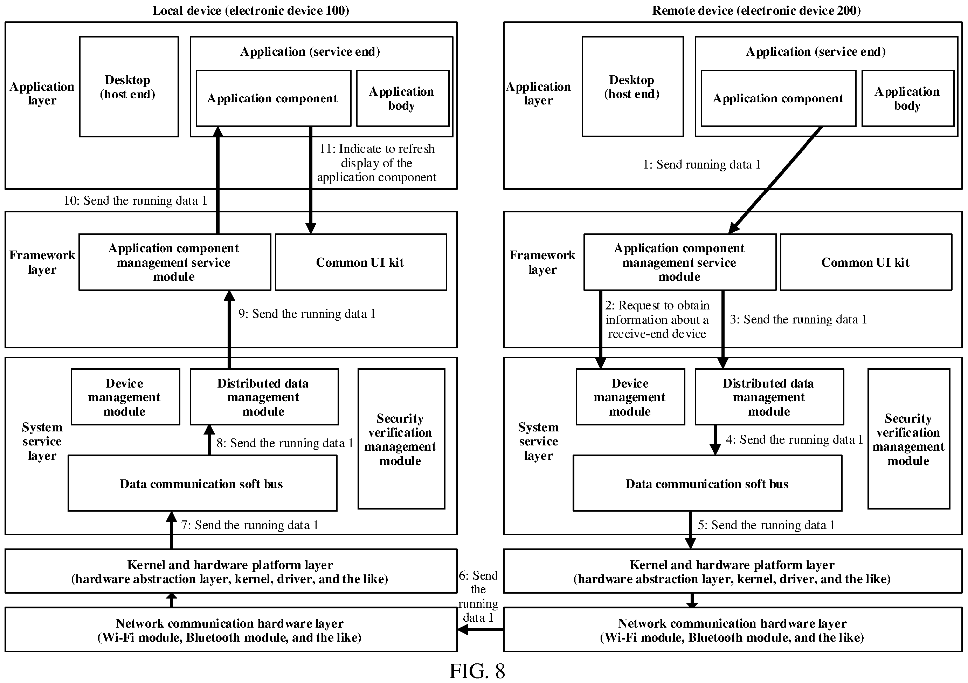

With reference to FIG. 8, the following describes an example of a possible collaboration mode between internal modules of the electronic device 100 and the electronic device 200 in the stage of cross-device data sharing between application components.

Step 1: An application component of the electronic device 200 may send running data 1 to the application component management service module of the electronic device 200.

Specifically, after the application component service connection is established, the application component of the electronic device 200 may synchronize latest running data (for example, the running data 1) to the electronic device 100 through an API provided by the application component management service module of the electronic device 200.

The application component of the electronic device 200 may be the application component 2 in FIG. 6.

Step 2: The application component management service module of the electronic device 200 may invoke the device management module of the electronic device 200, to request to obtain information about a receive-end device.

Specifically, the device management module of the electronic device 200 has stored the information about the receive-end device (for example, the information about the electronic device 100) in FIG. 7. Therefore, after receiving the running data 1 sent by the application component of the electronic device 200, the application component management service module of the electronic device 200 may invoke the device management module of the electronic device 200 to obtain the information about the receive-end device, to determine one or more specific electronic devices to which the running data 1 needs to be sent.

In some examples, step 2 is optional. For example, step 2 may not be performed if the application component management service module of the electronic device 200 has stored the information about the receive-end device.

In this embodiment of this application, for example, the receive-end device is the electronic device 100.

Step 3: The application component management service module of the electronic device 200 may send the running data 1 to a distributed data management module of the electronic device 200.

Specifically, after one or more specific electronic devices to which the running data 1 needs to be sent are determined, the application component management service module of the electronic device 200 may invoke the distributed data management module of the electronic device 200, to request actual transmission for the running data 1.

Step 4: The distributed data management module of the electronic device 200 may send the running data 1 to the data communication soft bus of the electronic device 200.

Specifically, after receiving the running data 1 sent by the application component management service module of the electronic device 200, the distributed data management module of the electronic device 200 may invoke the data communication soft bus of the electronic device 200, to request to transmit the running data 1 to another electronic device (for example, the electronic device 100).

Step 5: The data communication soft bus of the electronic device 200 may send the running data 1 to the kernel and hardware platform layer of the electronic device 200.

Specifically, after receiving the running data 1 sent by the distributed data management module of the electronic device 200, the data communication soft bus of the electronic device 200 may invoke the network communication hardware layer of the electronic device 200 by using a driver provided by the kernel and hardware platform layer of the electronic device 200, to request to send the running data 1 to another electronic device (for example, the electronic device 100) through a data transmission link established between the electronic device 200 and the another electronic device (for example, the electronic device 100).

Step 6: The network communication hardware layer of the electronic device 200 may send the running data 1 to the network communication hardware layer of the electronic device 100.

It is easily understood that, in this step, the running data 1 is transmitted from the electronic device 200 to the electronic device 100 through a physical link.

Step 7: The network communication hardware layer of the electronic device 100 sends the running data 1 to the data communication soft bus of the electronic device 100 through the kernel and hardware platform layer of the electronic device 100.

Specifically, after receiving the running data 1 sent by the network communication hardware layer of the electronic device 200, the network communication hardware layer of the electronic device 100 may call back the data communication soft bus of the electronic device 100 through the kernel and hardware platform layer of the electronic device 100, and send the running data 1 to the data communication soft bus of the electronic device 100.

Step 8: The data communication soft bus of the electronic device 100 may send the running data 1 to a distributed data management module of the electronic device 100.

Specifically, after receiving the running data 1 sent by the kernel and hardware platform layer of the electronic device 100, the data communication soft bus of the electronic device 100 may call back the distributed data management module of the electronic device 100, and send the running data 1 to the distributed data management module of the electronic device 100. Further, the distributed data management module of the electronic device 100 may perform data persistence on the running data 1.

It can be understood that, when sending the running data 1 to the electronic device 100, the electronic device 200 may further send some information related to the running data 1, for example, device information of a source of the running data 1, sending time of the running data 1, and information about an application component that generates the running data 1. In this way, the electronic device 100 may further process the running data 1 based on the information (for example, determine a specific application component, from which the running data 1 comes, on a specific device, and perform data persistence). The running data 1 and the information related to the running data 1 together may be sent to the electronic device 100 in a form of a message, for example, the message 1 sent by the electronic device 200 to the electronic device 100 in step S606 shown in FIG. 6.

For example, the message 1 may include but is not limited to the following code:

```
         <source deviceId="xxx"timestamp="xxx" serviceId="xxx">
         <data>
             ...
         </data>
         </source>
```

The source element in the <source> tag may be used to specify some attributes related to the running data 1. For example, the deviceId attribute may be used to specify a device ID of the source of the running data 1, the timestamp attribute may be used to specify the sending time of the running data 1, and the serviceId attribute may be used to specify a service ID of the running data 1 (to be specific, an ID of the application component that generates the running data 1).

Content between the <data> tag (an opening tag) and the </data> tag (a closing tag) may be the running data 1.

In actual application, during data synchronization from the electronic device 200 to the electronic device 100, due to a network status, data sent earlier may arrive later, or data sent later may arrive earlier. To ensure that synchronized running data is latest data, the distributed data management module of the electronic device 100 may perform data persistence based on a timestamp corresponding to the timestamp attribute. It is easily understood that, if the timestamp corresponding to the timestamp attribute of the running data 1 is greater than a timestamp corresponding to a timestamp attribute of previously synchronized data, the electronic device 100 may determine that the running data 1 is latest data. Further, the electronic device 100 may perform data persistence on the running data 1.

Step 9: The distributed data management module of the electronic device 100 may send the running data 1 to an application component management service module of the electronic device 100.

Specifically, after performing data persistence on the running data 1, the distributed data management module of the electronic device 100 may call back the application component management service module of the electronic device 100, and send the running data 1 to the application component management service module of the electronic device 100.

Step 10: The application component management service module of the electronic device 100 may send the running data 1 to an application component of the electronic device 100.

Specifically, after receiving the running data 1 sent by the distributed data management module of the electronic device 100, the application component management service module of the electronic device 100 may call back the application component of the electronic device 100, and send the running data 1 to the application component of the electronic device 100, to notify the application component of the electronic device 100 that display needs to be refreshed.

The application component of the electronic device 100 may be the application component 1 in FIG. 6.

Step 11: The application component of the electronic device 100 may indicate the common UI kit of the electronic device 100 to refresh display of the application component.

Specifically, after receiving the running data 1 sent by the application component management service module of the electronic device 100, the application component of the electronic device 100 may indicate the common UI kit of the electronic device 100 to refresh display of the application component. To be specific, the application component of the electronic device 100 may refresh UI display through the common UI kit of the electronic device 100 based on the running data 1 (namely, latest distributed data). After the refreshing is completed, the electronic device 100 may display a refreshed application component.

### 2. Control command synchronization scenario:

The following describes a specific implementation process of the application component interaction method provided in embodiments of this application in a "control command synchronization" scenario.

FIG. 9 shows an example of a specific process of an application component interaction method in a "control command synchronization" scenario according to an embodiment of this application.

As shown in FIG. 9, the method may be applied to a communication system including an electronic device 100 (namely, a local device, which may also be referred to as a source device) and an electronic device 200 (namely, a remote device, which may also be referred to as a sink device). The following describes in detail specific steps of the method.

First, in this embodiment of this application, an application component service connection needs to be established between the electronic device 100 and the electronic device 200. After an application component service connection is established, steps in the following stage 2 may be further performed to implement cross-device control command synchronization between application components.

For example, a possible implementation of establishing an application component service connection between the electronic device 100 and the electronic device 200 may be an implementation described in the following stage 1 (step S901 to step S905). Details are described below.

### Stage 1: Stage of establishing an application component service connection

S901 and S902: The electronic device 100 detects an event that a user triggers establishment of an application component service connection 1'. In response to the event, the electronic device 100 sends, to the electronic device 200, a request for establishing the application component service connection 1', where the request includes device information of the electronic device 100 and information about the application component 1'.

The information about the application component 1' may include but is not limited to a package name and a class name of the application component 1', and an ID of the application component 1' (for example, an instantiation ID of the application component 1').

Step S901 and step S902 are similar to step S601 and step S602 shown in FIG. 6. For specific implementation processes of step S901 and step S902, refer to related descriptions of step S601 and step S602 shown in FIG. 6. Details are not described herein again.

S903: The electronic device 200 performs trust verification on the electronic device 100, and if the trust verification succeeds, determines to establish the application component service connection 1', and stores the device information of the electronic device 100 and the information about the application component 1'.

Step S903 is similar to step S603 shown in FIG. 6. For a specific implementation process of step S903, refer to related descriptions of step S603 shown in FIG. 6. Details are not described herein again.

S904 and S905: The electronic device 200 establishes the application component service connection 1' to the electronic device 100, and the electronic device 100 displays identification information indicating that the application component service connection 1' is successfully established.

Specifically, after the electronic device 200 determines that the application component service connection 1' can be established, the electronic device 200 may establish the application component service connection 1' to the electronic device 100. After the application component service connection 1' is successfully established, the electronic device 100 may display the identification information indicating that the application component service connection 1' is successfully established. In this way, the user can learn that the electronic device 200 has successfully established the application component service connection 1' to the electronic device 100 and is currently in a "connected" state.

A display mode of the identification information indicating that the application component service connection 1' is successfully established may be the display mode of the example identifier 541 shown in FIG. 5D.

A possible collaboration mode between internal modules of the electronic device 100 and the electronic device 200 in the stage of establishing an application component service connection is similar to that in FIG. 7. Details are not described herein again.

After an application component service connection is established between the electronic device 100 and the electronic device 200, the electronic device 100 may send a control command to the electronic device 200 based on the service connection, to implement cross-device control command synchronization between application components.

For example, a possible implementation of cross-device control command synchronization between application components may be an implementation described in the following stage 2 (step S906 to step S908). Details are described below.

Stage 2: Stage of cross-device control command synchronization between application components

S906 and S907: The electronic device 100 detects an operation 1 performed by the user on the application component 1'. In response to the operation 1, the electronic device 100 may send a message 1' to the electronic device 200, where the message may include a control command 1, and the command may be generated by the electronic device 100 based on the operation 1.

For example, the application component 1' may be the application component 511 shown in FIG. 5D.

For example, the operation 1 may be an operation (for example, a tap operation) performed by the user on the "Photo" option in the application component 511 shown in FIG. 5D, and the control command 1 may be a command instructing the electronic device 200 to start a "camera" application (for example, start the "camera" application and display a photographing interface shown in FIG. 5E or FIG. 5F).

For example, the operation 1 may be an operation (for example, a tap operation) performed by the user on the shutter option 572 shown in FIG. 5G, and the control command 1 may be a command instructing the electronic device 200 to perform a photographing operation.

S908: The electronic device 200 performs a corresponding task according to the control command 1.

Specifically, after receiving the message 1' sent by the electronic device 100, the electronic device 200 may respond to the control command 1 included in the message, to be specific, may perform a corresponding task according to the control command 1.

For example, when the control command 1 is a command instructing the electronic device 200 to start the "camera" application, the electronic device 200 may start the "camera" application, for example, start the "camera" application and display a user interface shown in FIG. 5E, or display the window 562 in the application component 561 shown in FIG. 5F.

For example, when the control command 1 is a command instructing the electronic device 200 to perform a photographing operation, the electronic device 200 may perform a photographing operation, for example, save an image displayed in the preview frame 551 of the electronic device 200 shown in FIG. 5E (or an image displayed in the preview frame 561 of the electronic device 200 shown in FIG. 5F) as a picture in a "gallery" application of the electronic device 200.

According to the implementation of the method provided in the embodiment shown in FIG. 9, based on a trusted network data communication technology and a distributed data synchronization technology, a local device (for example, the electronic device 100) may synchronize a control command of a user for an application component on the local device to a remote device (for example, the electronic device 200), so that the remote device performs a task corresponding to the control command. To be specific, the user may perform an operation on the application component on the local device to conveniently control the remote device to perform a corresponding task. This implements cross-device control command synchronization between application components. A control behavior of the user on the local device may be directly synchronized to the remote device, so that the remote device presents control effect achieved by the control behavior of the user on the local device. This simplifies user operations and improves user experience.

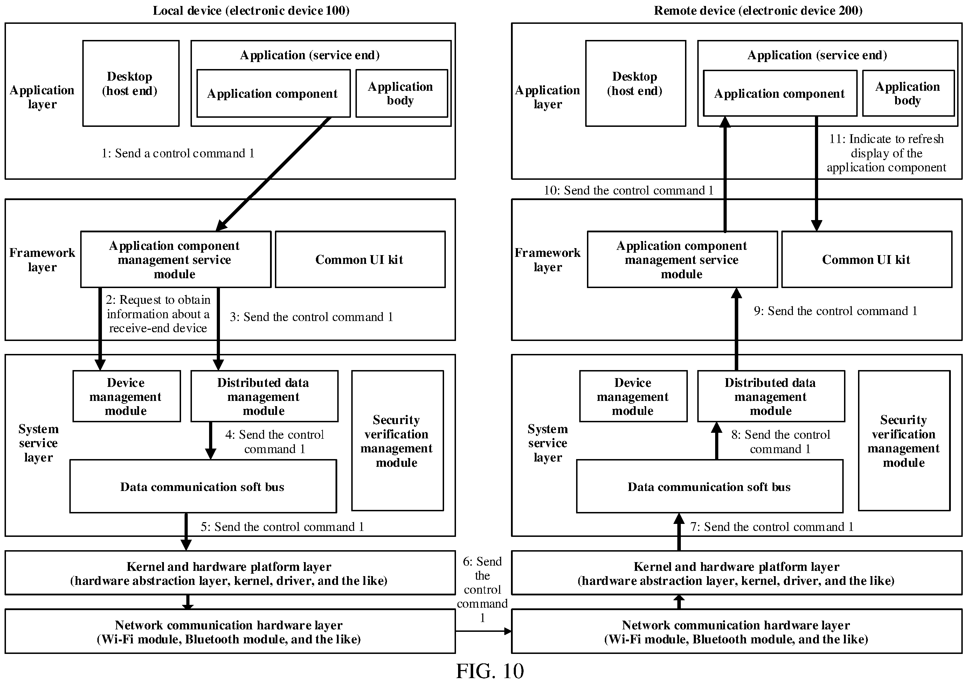

With reference to FIG. 10, the following describes an example of a possible collaboration mode between internal modules of the electronic device 100 and the electronic device 200 in the stage of cross-device control command synchronization between application components.

Step 1: An application component of the electronic device 100 may send a control command 1 to an application component management service module of the electronic device 100.

Specifically, after the application component service connection is established, the application component of the electronic device 100 may synchronize a control command (for example, the control command 1) generated based on a user operation to the electronic device 200 through an API provided by the application component management service module of the electronic device 100.

The application component of the electronic device 100 may be the application component 1' in FIG. 9.

For example, the application component 1' may be the application component 511 shown in FIG. 5D.

Step 2: The application component management service module of the electronic device 100 may invoke a device management module of the electronic device 100, to request to obtain information about a receive-end device.

Specifically, after the application component service connection is established, the receive-end device (for example, the electronic device 200) may send the information about the receive-end device (for example, device information of the receive-end device and information about an application component that has established the application component service connection 1' to the application component 1') to the electronic device 100, and the device management module of the electronic device 100 may store the information about the receive-end device (for example, device information of the electronic device 200 and the information about the application component that has established the application component service connection 1' to the application component 1'). Therefore, after receiving the control command 1 sent by the application component of the electronic device 100, the application component management service module of the electronic device 100 may invoke the device management module of the electronic device 100 to obtain the information about the receive-end device, to determine one or more specific electronic devices to which the control command 1 needs to be sent.

In some examples, step 2 is optional. For example, step 2 may not be performed if the application component management service module of the electronic device 100 has also stored the information about the receive-end device.

In this embodiment of this application, for example, the receive-end device is the electronic device 200.

Step 3: The application component management service module of the electronic device 100 may send the control command 1 to a distributed data management module of the electronic device 100.

Specifically, after one or more specific electronic devices to which the control command 1 needs to be sent are determined, the application component management service module of the electronic device 100 may invoke the distributed data management module of the electronic device 100, to request actual transmission for the control command 1.

Step 4: The distributed data management module of the electronic device 100 may send the control command 1 to a data communication soft bus of the electronic device 100.

Specifically, after receiving the control command 1 sent by the application component management service module of the electronic device 100, the distributed data management module of the electronic device 100 may invoke the data communication soft bus of the electronic device 100, to request to transmit the control command 1 to the receive-end device (for example, the electronic device 200).

Step 5: The data communication soft bus of the electronic device 100 may send the control command 1 to a kernel and hardware platform layer of the electronic device 100.

Specifically, after receiving the control command 1 sent by the distributed data management module of the electronic device 100, the data communication soft bus of the electronic device 100 may invoke a network communication hardware layer of the electronic device 100 by using a driver provided by the kernel and hardware platform layer of the electronic device 100, to request to send the control command 1 to the receive-end device (for example, the electronic device 200) through a data transmission link established between the electronic device 100 and the receive-end device (for example, the electronic device 200).

Step 6: The network communication hardware layer of the electronic device 100 may send the control command 1 to a network communication hardware layer of the electronic device 200.

It is easily understood that, in this step, the control command 1 is transmitted from the electronic device 100 to the electronic device 200 through a physical link.

Step 7: The network communication hardware layer of the electronic device 200 sends the control command 1 to a data communication soft bus of the electronic device 200 through a kernel and hardware platform layer of the electronic device 200.

Specifically, after receiving the control command 1 sent by the network communication hardware layer of the electronic device 100, the network communication hardware layer of the electronic device 200 may call back the data communication soft bus of the electronic device 200 through the kernel and hardware platform layer of the electronic device 200, and send the control command 1 to the data communication soft bus of the electronic device 200.

Step 8: The data communication soft bus of the electronic device 200 may send the control command 1 to a distributed data management module of the electronic device 200.

Specifically, after receiving the control command 1 sent by the kernel and hardware platform layer of the electronic device 200, the data communication soft bus of the electronic device 200 may call back the distributed data management module of the electronic device 200, and send the control command 1 to the distributed data management module of the electronic device 200.

It can be understood that, when sending the control command 1 to the electronic device 200, the electronic device 100 may further send some information related to the control command 1, for example, device information of a source of the control command 1, sending time of the control command 1, and information about an application component that generates the control command 1. In this way, the electronic device 200 may further process the control command 1 based on the information (for example, determine a specific application component, from which the control command 1 comes, on a specific device, and sort a plurality of commands). The control command 1 and the information related to the control command 1 together may be sent to the electronic device 200 in a form of a message, for example, the message 1' sent by the electronic device 100 to the electronic device 200 in step S907 shown in FIG. 9.

For example, the message 1' may include but is not limited to the following code:

```
         <source deviceId="xxx"timestamp="xxx" serviceId="xxx">
         <action>
            ...
         </action>
         </source>
```

The source element in the <source> tag may be used to specify some attributes related to the control command 1. For example, the deviceId attribute may be used to specify a device ID of the source of the control command 1, the timestamp attribute may be used to specify the sending time of the control command 1, and the serviceId attribute may be used to specify a service ID of the control command 1 (to be specific, an ID of the application component that generates the control command 1).

Content between the <action> tag (an opening tag) and the </action> tag (a closing tag) may be the control command 1.

In actual application, during control command synchronization from the electronic device 100 to the electronic device 200, due to a network status, a control command sent earlier may arrive later, or a control command sent later may arrive earlier. To ensure that a synchronized control command is a latest control command, the distributed data management module of the electronic device 200 may sort a plurality of commands based on a timestamp corresponding to the timestamp attribute. It is easily understood that, if the timestamp corresponding to the timestamp attribute of the control command 1 is greater than a timestamp corresponding to a timestamp attribute of a previously synchronized control command, the electronic device 200 may determine that the control command 1 is a latest control command, and may further determine to immediately respond to the latest control command.

Step 9: The distributed data management module of the electronic device 200 may send the control command 1 to an application component management service module of the electronic device 200.

Specifically, after determining that the control command 1 is the latest control command, the distributed data management module of the electronic device 200 may call back the application component management service module of the electronic device 200, and send the control command 1 to the application component management service module of the electronic device 200.

Step 10: The application component management service module of the electronic device 200 may send the control command 1 to an application component of the electronic device 200.

Specifically, after receiving the control command 1 sent by the distributed data management module of the electronic device 200, the application component management service module of the electronic device 200 may call back the application component of the electronic device 200, and send the control command 1 to the application component of the electronic device 200, to notify the application component of the electronic device 200 that display needs to be refreshed, and perform a task corresponding to the control command 1.

The application component of the electronic device 200 may be an application component that has established the application component service connection 1' to the application component 1'.

For example, the application component of the electronic device 200 may be the application component 561 shown in FIG. 5F.

Step 11: The application component of the electronic device 200 may indicate a common UI kit of the electronic device 200 to refresh display of the application component.

Specifically, after receiving the control command 1 sent by the application component management service module of the electronic device 200, the application component of the electronic device 200 may immediately respond to the control command 1, and refresh UI display through the common UI kit of the electronic device 200 according to the control command 1 (namely, a latest distributed command). After the refreshing is completed, the electronic device 200 may display a refreshed application component.

The following describes a diagram of a structure of an electronic device 100 provided in embodiments of this application.

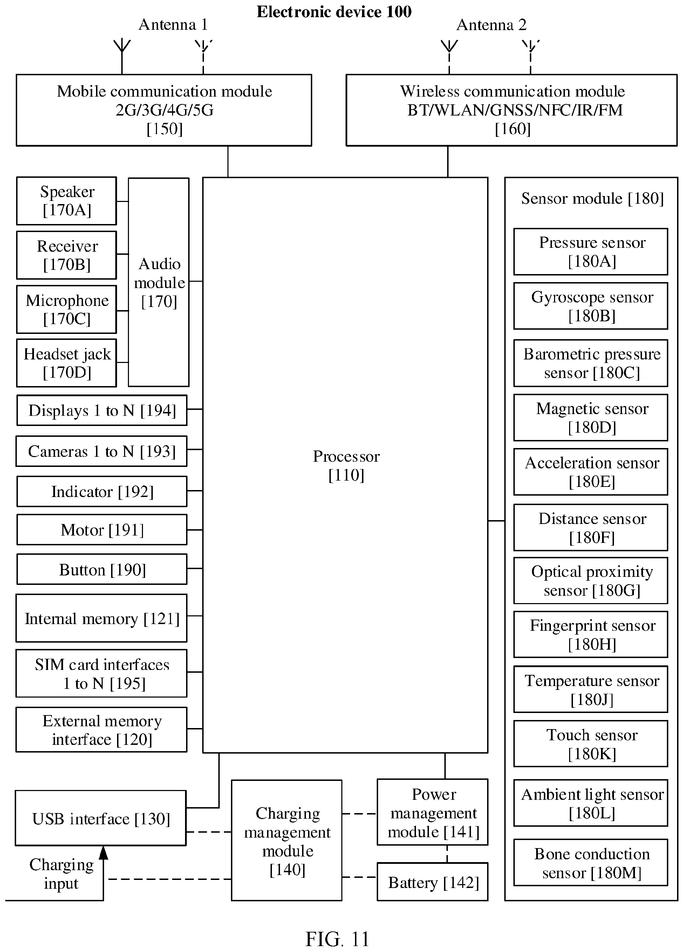

FIG. 11 shows an example structure of an electronic device 100 according to an embodiment of this application.

As shown in FIG. 11, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to control instruction reading and instruction execution.

A memory may be further disposed in the processor 110 to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and analog signal sampling, quantization, and encoding. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be used for connecting a charger to charge the electronic device 100, or may be configured to transmit data between the electronic device 100 and a peripheral device, or may be used for connecting a headset for playing audio through the headset. The interface may alternatively be used for connecting another terminal device, for example, an AR device.

It can be understood that an interface connection relationship between the modules shown in this embodiment of this application is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive charging input from a charger. The charger may be a wireless charger or a wired charger. In some embodiments of wired charging, the charging management module 140 may receive charging input from a wired charger through the USB interface 130. In some embodiments of wireless charging, the charging management module 140 may receive wireless charging input through a wireless charging coil of the electronic device 100. When charging the battery 142, the charging management module 140 may further supply power to the electronic device 100 through the power management module 141.

The power management module 141 is configured to connect to the battery 142, the charging management module 140, and the processor 110. The power management module 141 receives input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium- or highfrequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, and the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more devices integrating at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and color temperature of an image shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a mode of transfer between human brain neurons, and may further continuously perform self-learning. Intelligent cognition applications, such as image recognition, facial recognition, speech recognition, and text understanding, of the electronic device 100 may be implemented through the NPU.

The external memory interface 120 may be used for connecting an external memory card, for example, a microSD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121 to implement various function applications and data processing of the electronic device 100. The internal memory 121 may include a program storage area and a data storage area. The program storage area may store an operating system, an application for at least one function (for example, a sound play function or an image play function), and the like. The data storage area may store data (for example, audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music play and recording, through the audio module 170, the speaker 170A, the receiver 170B, the microphone 170C, the headset jack 170D, the application processor, and the like.

The audio module 170 is configured to convert digital audio information into analog audio signal output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode through the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to capture a sound signal and further implement a noise reduction function. In some other embodiments, three, four, or more microphones 170C may alternatively be disposed in the electronic device 100, to capture a sound signal, implement noise reduction, and recognize a sound source, to implement a directional recording function and the like.

The headset jack 170D is used for connecting a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on the Messages icon, an instruction for creating a new SMS message is executed.

The gyroscope sensor 180B may be configured to determine a motion attitude of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during image shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a somatic game scenario.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening/closing state of a leather case or a detected opening/closing state of the flip cover.

The acceleration sensor 180E may detect accelerations in various directions (usually on three axes) of the electronic device 100, may detect a magnitude and a direction of gravity when the electronic device 100 is still, and may be further configured to recognize an attitude of the electronic device 100 and used in applications such as landscape/portrait mode switching and a pedometer.

The distance sensor 180F is configured to measure a distance. The electronic device 100 may measure a distance by using infrared or laser. In some embodiments, in an image shooting scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically turn off a screen for power saving. The optical proximity sensor 180G may also be used in a smart cover mode or a pocket mode for automatic screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to capture a fingerprint. The electronic device 100 may use a feature of the captured fingerprint to implement fingerprint-based unlocking, application lock access, fingerprint-based photographing, fingerprint-based call answering, and the like.

The temperature sensor 180J is configured to detect temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor near the temperature sensor 180J, to reduce power consumption for thermal protection. In some other embodiments, when the temperature is lower than another threshold, the electronic device 100 heats the battery 142 to prevent the electronic device 100 from being shut down abnormally due to low temperature. In some other embodiments, when the temperature is lower than still another threshold, the electronic device 100 boosts an output voltage of the battery 142 to avoid abnormal shutdown due to low temperature.

The touch sensor 180K is also referred to as a "touch panel". The touch sensor 180K may be disposed on the display 194, and the touch sensor 180K and the display 194 constitute a touchscreen, which is also referred to as a "touch control screen". The touch sensor 180K is configured to detect a touch operation performed on or near the touch sensor. The touch sensor may transmit the detected touch operation to the application processor to determine a type of a touch event. Visual output related to the touch operation may be provided by using the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in a headset, to obtain a bone conduction headset. The audio module 170 may obtain a speech signal through parsing based on the vibration signal, obtained by the bone conduction sensor 180M, of the vibration bone of the vocal-cord part, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device 100 may receive input on the button, and generate button signal input related to user settings and function control of the electronic device 100.

The motor 191 may generate a vibration prompt. The motor 191 may be configured to provide an incoming call vibration prompt or a touch vibration feedback. For example, touch operations performed on different applications (for example, photographing and audio play) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a battery level change, or may be configured to indicate a message, a missed call, a notification, and the like.

The SIM card interface 195 is used for connecting a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted in a same SIM card interface 195 at the same time. The plurality of cards may belong to a same type or different types. The SIM card interface 195 is also compatible with different types of SIM cards. The SIM card interface 195 is also compatible with an external memory card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

It should be understood that the electronic device 100 shown in FIG. 11 is merely an example, and the electronic device 100 may include more or fewer components than those shown in FIG. 11, two or more components may be combined, or different component configurations may be used. The components shown in FIG. 11 may be implemented in hardware including one or more signal processing and/or application-specific integrated circuits, software, or a combination of hardware and software.

A structure of the electronic device 200 may be the same as or similar to the structure of the electronic device 100. For content related to the structure of the electronic device 200, refer to related descriptions of the example structure of the electronic device 100 shown in FIG. 11. Details are not described herein again.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer program instructions are loaded and executed on a computer, all or some of the processes or functions according to this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Persons of ordinary skill in the art can understand that all or some of the processes of the methods in the foregoing embodiments may be implemented by a computer program instructing related hardware. The program may be stored in a computer-readable storage medium. When the program is executed, the processes of the method embodiments may be performed. The foregoing storage medium includes any medium that can store program code, such as a ROM, a random access memory RAM, a magnetic disk, or an optical disc.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An application component interaction method, applied to a first electronic device, wherein the method comprises:
displaying, by the first electronic device, a first user interface, wherein the first user interface comprises a first application component, and the first application component is an application component of the first electronic device;
establishing, by the first electronic device, a first connection to a second electronic device;
receiving, by the first electronic device based on the first connection, a first message sent by the second electronic device, wherein the first message comprises first data, and the first data is generated by the second electronic device by running a second application component; and
generating, by the first electronic device, first content based on the first data, and displaying the first content in the first application component, wherein
the first connection is a connection between the first application component and the second application component.

2. The method according to claim 1, wherein after the establishing, by the first electronic device, a first connection to a second electronic device, the method further comprises:
displaying, by the first electronic device, a first identifier in the first application component, wherein the first identifier indicates a status of the first connection, wherein
a display mode of the first identifier in a case in which the first connection is in a connected state is different from a display mode of the first identifier in a case in which the first connection is in a disconnected state.

3. The method according to claim 2, wherein after the displaying, by the first electronic device, a first identifier in the first application component, the method further comprises:
detecting, by the first electronic device, a first operation performed by a user on the first identifier;
displaying, by the first electronic device, a first window in response to the first operation, wherein the first window comprises a first option;
detecting, by the first electronic device, a second operation performed by the user on the first option; and
deleting, by the first electronic device, the first connection in response to the second operation.

4. The method according to claim 3, wherein when the first connection is in the disconnected state, the first window further comprises a second option, and before the detecting, by the first electronic device, a second operation performed by the user on the first option, the method further comprises:
detecting, by the first electronic device, a third operation performed by the user on the second option; and
re-establishing, by the first electronic device, the first connection to the second electronic device in response to the third operation.

5. The method according to any one of claims 2 to 4, wherein device information of the second electronic device is displayed on the first identifier.

6. The method according to any one of claims 1 to 5, wherein after the displaying, by the first electronic device, the first content in the first application component, the method further comprises:
receiving, by the first electronic device based on the first connection, a second message sent by the second electronic device, wherein the second message comprises second data, the second data is generated by the second electronic device by running the second application component after the second electronic device generates the first data, and the second data is different from the first data; and
generating, by the first electronic device, second content based on the second data, and displaying the second content in the first application component.

7. The method according to any one of claims 1 to 6, wherein before the establishing, by the first electronic device, a first connection to a second electronic device, the method further comprises:
detecting, by the first electronic device, a fourth operation performed by the user;
displaying, by the first electronic device, a second window in response to the fourth operation, wherein the second window comprises one or more options, and the one or more options comprise an option corresponding to the device information of the second electronic device;
detecting, by the first electronic device, a fifth operation performed by the user on the option corresponding to the device information of the second electronic device; and
sending, by the first electronic device, a first request to the second electronic device in response to the fifth operation, wherein the first request is used to request the second electronic device to establish the first connection to the first electronic device.

8. An application component interaction method, applied to a second electronic device, wherein the method comprises:
receiving, by the second electronic device, a first request sent by a first electronic device, wherein the first request is used to request the second electronic device to establish a first connection to the first electronic device;
establishing, by the second electronic device, the first connection to the first electronic device; and
sending, by the second electronic device, a first message to the first electronic device based on the first connection, wherein the first message comprises first data, the first data is used by the first electronic device to display first content in a first application component, the first application component is an application component of the first electronic device, and the first data is generated by the second electronic device by running a second application component, wherein
the first connection is a connection between the first application component and the second application component.

9. The method according to claim 8, wherein the first request comprises device information of the first electronic device and information about the first application component, and before the establishing, by the second electronic device, the first connection to the first electronic device, the method further comprises:
performing, by the second electronic device, verification based on the device information of the first electronic device and the information about the first application component, and establishing, by the second electronic device, the first connection to the first electronic device when the verification succeeds.

10. The method according to claim 8 or 9, wherein after the sending, by the second electronic device, a first message to the first electronic device based on the first connection, the method further comprises:
sending, by the second electronic device, a second message to the first electronic device based on the first connection, wherein the second message comprises second data, the second data is generated by the second electronic device by running the second application component after the second electronic device generates the first data, the second data is different from the first data, and the second data is used by the first electronic device to display second content in the first application component.

11. An application component interaction method, applied to a first electronic device, wherein the method comprises:
displaying, by the first electronic device, a first user interface, wherein the first user interface comprises a first application component, and the first application component is an application component of the first electronic device;
establishing, by the first electronic device, a first connection to a second electronic device;
detecting, by the first electronic device, a first operation performed by a user on the first application component; and
sending, by the first electronic device, a first message to the second electronic device based on the first connection in response to the first operation, wherein the first message comprises a first control command, and the first control command instructs the second electronic device to respond to the first control command.

12. The method according to claim 11, wherein the first connection is a connection between the first application component and a second application component, and the second application component is an application component of the second electronic device.

13. The method according to claim 12, wherein the sending, by the first electronic device, a first message to the second electronic device based on the first connection specifically comprises:
sending, by the first electronic device, the first message to the second application component based on the first connection, wherein
the first control command instructs the second application component to respond to the first control command.

14. The method according to any one of claims 11 to 13, wherein after the establishing, by the first electronic device, a first connection to a second electronic device, the method further comprises:
displaying, by the first electronic device, a first identifier in the first application component, wherein the first identifier indicates a status of the first connection, wherein
a display mode of the first identifier in a case in which the first connection is in a connected state is different from a display mode of the first identifier in a case in which the first connection is in a disconnected state.

15. The method according to claim 14, wherein after the displaying, by the first electronic device, a first identifier in the first application component, the method further comprises:
detecting, by the first electronic device, a second operation performed by the user on the first identifier;
displaying, by the first electronic device, a first window in response to the second operation, wherein the first window comprises a first option;
detecting, by the first electronic device, a third operation performed by the user on the first option; and
deleting, by the first electronic device, the first connection in response to the third operation.

16. The method according to claim 15, wherein when the first connection is in the disconnected state, the first window further comprises a second option, and before the detecting, by the first electronic device, a third operation performed by the user on the first option, the method further comprises:
detecting, by the first electronic device, a fourth operation performed by the user on the second option; and
re-establishing, by the first electronic device, the first connection to the second electronic device in response to the fourth operation.

17. The method according to any one of claims 14 to 16, wherein device information of the second electronic device is displayed on the first identifier.

18. The method according to any one of claims 11 to 17, wherein before the establishing, by the first electronic device, a first connection to a second electronic device, the method further comprises:
detecting, by the first electronic device, a fifth operation performed by the user;
displaying, by the first electronic device, a second window in response to the fifth operation, wherein the second window comprises one or more options, and the one or more options comprise an option corresponding to the device information of the second electronic device;
detecting, by the first electronic device, a sixth operation performed by the user on the option corresponding to the device information of the second electronic device; and
sending, by the first electronic device, a first request to the second electronic device in response to the sixth operation, wherein the first request is used to request the second electronic device to establish the first connection to the first electronic device.

19. The method according to any one of claims 11 to 18, wherein one or more image shooting options are displayed in the first application component, the one or more image shooting options comprise a photographing option, the first operation is a tap operation performed by the user on the photographing option, the first control command instructs the second electronic device to start a camera application to enter a photographing mode, and after the detecting, by the first electronic device, a first operation performed by a user on the first application component, the method further comprises:
displaying, by the first electronic device, a third window in the first application component in response to the first operation, wherein the third window comprises a shutter option;
detecting, by the first electronic device, a seventh operation performed by the user on the shutter option;
sending, by the first electronic device, a second message to the second electronic device based on the first connection in response to the seventh operation, wherein the second message comprises a second control command, and the second control command instructs the second electronic device to perform a photographing operation; and
receiving, by the first electronic device based on the first connection, a first image sent by the second electronic device, and displaying the first image, wherein the first image is generated by the second electronic device after the second electronic device performs the photographing operation.

20. An application component interaction method, applied to a second electronic device, wherein the method comprises:
receiving, by the second electronic device, a first request sent by a first electronic device, wherein the first request is used to request the second electronic device to establish a first connection to the first electronic device;
establishing, by the second electronic device, the first connection to the first electronic device;
receiving, by the second electronic device based on the first connection, a first control command sent by the first electronic device, wherein the first control command is generated by the first electronic device after the first electronic device detects a first operation performed by a user on a first application component, and the first application component is an application component of the first electronic device; and
responding to, by the second electronic device, the first control command.

21. The method according to claim 20, wherein the first connection is a connection between the first application component and a second application component, and the second application component is an application component of the second electronic device.

22. The method according to claim 21, wherein the receiving, by the second electronic device based on the first connection, a first control command sent by the first electronic device specifically comprises:
receiving, by the second application component based on the first connection, the first control command sent by the first electronic device; and
the responding to, by the second electronic device, the first control command specifically comprises:
responding to, by the second application component, the first control command.

23. The method according to any one of claims 20 to 22, wherein the first request comprises device information of the first electronic device and information about the first application component, and before the establishing, by the second electronic device, the first connection to the first electronic device, the method further comprises:
performing, by the second electronic device, verification based on the device information of the first electronic device and the information about the first application component, and establishing, by the second electronic device, the first connection to the first electronic device when the verification succeeds.

24. The method according to any one of claims 21 to 23, wherein one or more image shooting options are displayed in the first application component, the one or more image shooting options comprise a photographing option, the first operation is a tap operation performed by the user on the photographing option, the first control command instructs the second electronic device to start a camera application to enter a photographing mode, and the responding to, by the second electronic device, the first control command specifically comprises:
starting, by the second electronic device, the camera application by using the second application component, and displaying a first user interface, wherein the first user interface is a user interface of the camera application, the first user interface comprises a first preview frame, and the first preview frame comprises a first image; or
displaying, by the second electronic device, a first window in the second application component, wherein the first window comprises a second preview frame, and the second preview frame comprises a first image; and
after the responding to, by the second electronic device, the first control command, the method further comprises:
receiving, by the second electronic device based on the first connection, a second control command sent by the first electronic device, wherein the second control command instructs the second electronic device to perform a photographing operation; and
performing, by the second electronic device, the photographing operation in response to the second control command, and sending the first image to the first electronic device.

25. A communication system, wherein the communication system comprises a first electronic device and a second electronic device;
the first electronic device is configured to display a first user interface, wherein the first user interface comprises a first application component, and the first application component is an application component of the first electronic device;
the first electronic device is further configured to send a first request to the second electronic device, wherein the first request is used to request the second electronic device to establish a first connection to the first electronic device;
the second electronic device is configured to receive the first request, and establish the first connection to the first electronic device;
the second electronic device is further configured to send a first message to the first electronic device based on the first connection, wherein the first message comprises first data, and the first data is generated by the second electronic device by running a second application component; and
the first electronic device is further configured to generate first content based on the first data, and display the first content in the first application component, wherein
the first connection is a connection between the first application component and the second application component.

26. A communication system, wherein the communication system comprises a first electronic device and a second electronic device;
the first electronic device is configured to display a first user interface, wherein the first user interface comprises a first application component, and the first application component is an application component of the first electronic device;
the first electronic device is further configured to send a first request to the second electronic device, wherein the first request is used to request the second electronic device to establish a first connection to the first electronic device;
the second electronic device is configured to receive the first request, and establish the first connection to the first electronic device;
the first electronic device is further configured to detect a first operation performed by a user on the first application component;
the first electronic device is further configured to send a first message to the second electronic device based on the first connection, wherein the first message comprises a first control command; and
the second electronic device is further configured to respond to the first control command.

27. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 7, or claims 8 to 10, or claims 11 to 19, or claims 20 to 24.

28. A computer storage medium, wherein the computer storage medium stores a computer program, the computer program comprises program instructions, and when the program instructions are run on an electronic device, the electronic device is enabled to perform the method according to any one of claims 1 to 7, or claims 8 to 10, or claims 11 to 19, or claims 20 to 24.
